# FASCICULE DE BREVET EUROPEEN

(11) **EP 4 136 434 B1**
(45) Date de publication et mention de la délivrance du brevet: **22.05.2024**
(21) Numéro de dépôt: 21726434.0
(22) Date de dépôt: 09.04.2021
(51) Int. Cl.: G01N 21/90

(54) **POSTE ET PROCÉDÉ POUR DÉTECTER EN TRANSLATION DES DÉFAUTS DE GLAÇURES SUR DES RÉCIPIENTS EN VERRE**
STATION UND VERFAHREN ZUR TRANSLATIONALEN DETEKTION VON GLASURDEFEKTEN AUF GLASBEHÄLTERN
STATION AND METHOD FOR TRANSLATIONALLY DETECTING GLAZE DEFECTS ON GLASS CONTAINERS

(30) Priorité: 16.04.2020 FR 2003830
(43) Date de publication de la demande: 22.02.2023
(73) Titulaire: TIAMA, 69230 Saint-Genis-Laval (FR)
(72) Inventeur: COSNEAU, Laurent, 69510 SOUCIEU-EN-JARREST (FR); FILLON, Pascal, 69290 GREZIEU LA VARENNE (FR)
(74) Mandataire: Cabinet Beau de Loménie
(86) Numéro de dépôt international: PCT/FR2021/050634
(87) Numéro de publication internationale: WO 2021/209704

(56) Documents cités:
- EP-A1- 1 147 405
- EP-A1- 2 434 276
- DE-A1- 3 815 539
- DE-U1- 29 504 073
- US-A- 4 293 219
- US-A- 4 751 386
- US-A- 5 072 127
- US-A1- 2001 048 524

## Description

### Domaine Technique

La présente invention concerne le domaine technique de l'inspection de récipients vides en verre, tels que par exemple des bouteilles, des pots, des flacons en vue de déceler d'éventuels défauts de type glaçure.

La présente invention concerne plus précisément le contrôle de défauts de type glaçure sur des récipients vides en verre, défilant en ligne après leur fabrication en vue de déterminer si de tels récipients respectent des critères d'absence de défauts requis.

### Technique antérieure

Après leur fabrication, les récipients en verre vides font l'objet de divers contrôles de présence de défauts, dont des contrôles de présence de glaçures. Ainsi, il est connu que la présence de glaçures dans un récipient en verre est généralement un problème grave de qualité car cela entraîne presque toujours une plus faible résistance mécanique.

Pour détecter les glaçures, on illumine une région du récipient, sous des incidences précises, au moyen de projecteurs émettant, en direction de ladite région, des faisceaux lumineux dirigés (convergents ou peu divergents). Les faisceaux lumineux dirigés atteignent la surface du récipient selon une incidence précise de manière que la majeure partie du faisceau pénètre dans la paroi de verre et se propage dans le verre. Si une glaçure est présente sur le trajet de lumière dans la paroi, alors la glaçure réfléchit le faisceau qui repart dans une direction modifiée pour sortir de la paroi selon un angle de sortie précis, qui est fonction de l'angle incident et de la position et forme de la glaçure. On observe, selon des angles d'observation précis adaptés aux angles de sortie des faisceaux réfléchis par les glaçures, la région illuminée au moyen de capteurs de lumière, par exemple des photodiodes comme dans la demande de brevet EP 0 053 151, des réseaux de photodiodes, ou des capteurs d'images tels que des caméras linéaires ou matricielles comme dans les demandes de brevet EP 1 147 405 et EP 2 082 217. Cette observation est effectuée sous des angles d'observation précis tels que la lumière incidente réfléchie par un défaut de type glaçure est collectée/ observée par les capteurs de lumière, qui ne recevront de la lumière qu'au passage d'une glaçure durant la rotation du récipient autour de son axe vertical. En effet, les détections connues impliquent généralement de faire tourner le récipient à inspecter autour d'un axe central, sur au moins un tour.

Classiquement, les récipients sont convoyés sur les lignes de fabrication, sur des transporteurs à bande ou à chaîne, à une vitesse de translation la plus stable possible afin de limiter tous les accidents de convoyage tels que chutes, collisions et bourrages que provoquent des accélérations et décélérations brutales. Les solutions de détection des glaçures nécessitant une rotation de chaque récipient autour de son axe vertical présentent donc un certain nombre d'inconvénients car ces solutions nécessitent en particulier d'interrompre la translation des récipients. Pour réaliser cette inspection en rotation, il convient de fortement ralentir et arrêter les récipients, de les sortir du convoyeur à l'aide de systèmes de manutention et ensuite de les remettre en translation sur les convoyeurs. Par ailleurs, ces systèmes de manutention (guides, roues étoiles, galets d'entraînement, etc.) nécessitent des adaptations lourdes aux changements de format des récipients. En particulier, les adaptations de format consistent souvent en des opérations de démontage et montage, d'outillages spécifiques aux modèles de récipients, ainsi qu'en des opérations de réglage de ces systèmes de manutention. Par ailleurs, ces systèmes de manutention sont assez mal adaptés à la manutention de récipients de section non ronde. Ils sont également limités en vitesse, typiquement ils divisent par deux la cadence des lignes d'inspection, ce que n'imposent pas les systèmes d'inspections en ligne.

Enfin, les manutentions complexes sont fréquemment la cause de casses, blocages ou arrêts de ligne conduisant par accumulation, à des pertes de productivité non négligeables. Les contacts des récipients avec les guides, roues étoiles, galets d'entraînement, etc. sont des sources de détérioration inutile des récipients et posent des problèmes de maintenance des pièces d'usure, assez coûteuses.

Pour s'affranchir des inconvénients liés à la détection des glaçures par rotation des récipients, il existe des dispositifs qui permettent une détection de certaines glaçures lorsque le récipient est en translation. Le document US 4 293 219 donne une solution sans caméra. Dans cette solution, les capteurs contiennent chacun un seul élément photosensible collectant toute la lumière réfléchie perçue dans un cône de réception défini par la focale de sa lentille et son ouverture. Il est impossible de distinguer la forme des objets réfléchissants observés, ni leur localisation précise dans le champ des capteurs, si bien qu'il n'est pas possible de discriminer les petits objets, c'est-à-dire faire la différence entre une petite glaçure et un petit parasite.

La machine ARGOS, commercialisée par la demanderesse, est une machine de détection de glaçures en translation avec caméras qui ne nécessite pas la rotation du récipient autour de son axe central. Les caméras améliorent la détection, puisque des images sont réalisées de chaque région éclairée. Elle est prévue pour détecter les glaçures sur la bague et sur une partie de l'épaule d'un récipient. Elle met en oeuvre une tête d'éclairage et d'observation, dans laquelle les émetteurs de lumière dirigée et les têtes d'endoscopes sont organisés en fonction du diamètre de bague du récipient. La tête d'éclairage et d'observation forme un tunnel au travers duquel circule le goulot des récipients lors de leur translation au travers de l'installation pour l'inspection. Des endoscopes sont utilisés pour ramener un nombre d'images, acquises selon des directions d'observation variées, sur un nombre de capteurs réduit à deux ou trois. Par exemple tous les endoscopes destinés à la détection des glaçures verticales (par une illumination tangentielle horaire ou antihoraire), sont connectés à une seule caméra. Dans un premier poste, une seule acquisition d'image est faite par récipient pour la détection des glaçures verticales, et dans un deuxième poste séparé, une seule acquisition d'image est faite par récipient pour la détection des glaçures horizontales. Afin d'éviter des interférences entres des émetteurs et récepteurs activés simultanément dans le premier poste, on utilise une séparation des couples émetteur / récepteur par la couleur, autrement dit il y a des émetteurs de lumière rouge qui coopèrent avec des têtes d'endoscopes munies de filtres rouges et des émetteurs de lumière verte qui coopèrent avec des têtes d'endoscopes munies de filtres verts, ce qui n'autorise qu'un nombre réduit de conditions d'acquisition d'image dans un poste.

Le brevet EP 2 434 276 décrit une machine qui détecte les glaçures sur le goulot d'un récipient en combinant deux translations orthogonales, puisqu'une translation verticale se combine à la translation horizontale de défilement. Un dispositif de manutention est prévu pour permettre un déplacement vertical. Un tel dispositif de manutention est encombrant et occupe de la place autour des récipients car les éléments de levage qui s'engagent sur les côtés opposés du récipient pour prendre le récipient, cachent des parties des récipients qui ne pourront pas être inspectées. Ces parties cachées des récipients représentent une partie relativement importante au moins dans le cas de récipients de faible hauteur. Autrement dit, le système n'est pas adapté aux petits articles tels que des flacons de cosmétique ou de pharmacie. De plus, pour inspecter deux parties des récipients présentant des tranches différentes telles que la bague et le fond des récipients, cette machine nécessite la mise en série de deux postes de manutention et d'inspection conduisant à une installation coûteuse et encombrante.

La présente invention vise à remédier aux inconvénients de l'art antérieur en proposant un poste d'inspection de récipients en verre capable de détecter à grande cadence, d'éventuelles glaçures dans les différentes tranches de récipients relevant de différents diamètres.

### Exposé de l'invention

L'objet de l'invention vise à proposer un poste pour détecter des défauts de type glaçures dans une tranche de récipients possédant un axe central et défilant selon une direction de translation, sans rotation autour de leur axe central, le poste comportant :
- un support disposé le long d'un chemin dans lequel circule au moins une tranche des récipients s'étendant au-dessous d'un plan de référence d'inspection de la bague ou au-dessus d'un plan de référence d'inspection du fond, ce chemin de circulation comprenant successivement, une entrée, une zone d'inspection et une sortie pour les récipients ;
- au moins six imageurs formant des images et possédant un axe optique dirigé vers l'intérieur de la zone d'inspection en étant montés sur le support de manière que leurs axes optiques sont répartis autour de l'axe central des récipients en choisissant leurs angles d'azimut entre 0 et 360° par rapport à la direction de translation, de sorte que tous les points de la circonférence de la tranche des récipients soient représentés dans au moins une image acquise durant la traversée de la zone d'inspection par la tranche de récipient ;
- au moins douze projecteurs formant plusieurs ensembles comportant chacun au moins six projecteurs montés sur le support, possédant chacun une direction de faisceau et positionnés sur le support de manière que :
   (a) les directions de faisceau sont tangentes à un cylindre centré sur l'axe central du récipient, le diamètre du cylindre étant inclus dans une gamme de diamètres de tranches de récipients ;
   (b) les directions de faisceau sont réparties en azimut de manière que lorsque les projecteurs sont activés sélectivement pour des acquisitions d'image par les imageurs associés, tous les points de la circonférence de la tranche des récipients sont éclairés par au moins un des projecteurs ;
- un système électronique relié aux projecteurs et aux imageurs et adapté pour activer sélectivement les imageurs simultanément avec des projecteurs associés de manière à acquérir des images de chaque récipient traversant la zone d'inspection en vue de leur analyse pour détecter des défauts.

Selon l'invention :
- le support est un corps indéformable sur lequel les projecteurs et les imageurs, sont montés par une liaison complète de manière à fixer, par rapport audit support, les directions de faisceau des projecteurs et les axes optiques des imageurs, ce support comportant un volume libre englobant au moins le volume engendré par le profil des récipients selon uniquement la translation rectiligne des récipients dans la zone d'inspection, les imageurs et les projecteurs étant situés en dehors de ce volume libre ;
- plusieurs ensembles de projecteurs comportent chacun au moins six projecteurs dont la direction de leur faisceau est tangente à un cylindre de diamètre inclus dans une gamme de diamètres déterminée, ces gammes de diamètres étant différentes d'un ensemble à l'autre et fonction du diamètre de la tranche du récipient ;
- les projecteurs des ensembles possèdent une direction de faisceau avec des angles d'élévation de valeur absolue prise entre 0° et 45°, et de signe opposé aux angles d'élévation des axes optiques des imageurs associées ;
- les imageurs possèdent des axes optiques dont les angles d'élévation sont de valeur absolue prise entre 0° et 60°, et de signe opposé aux angles d'élévation des directions de faisceau des projecteurs associés ;
- le système électronique est configuré pour inspecter les récipients relevant de la totalité desdites gammes de diamètres, de manière que lors de l'inspection des récipients dont le diamètre de la tranche à inspecter est inclus dans la gamme de diamètres d'un ensemble, le système électronique assure l'acquisition d'au moins six images de chaque récipient durant sa traversée de la zone d'inspection en activant sélectivement les au moins six imageurs simultanément avec les projecteurs associés dudit ensemble.

Selon une variante avantageuse de réalisation, les projecteurs des différents ensembles sont disposés selon un arrangement comprenant côte à côte et/ou juxtaposé, un projecteur pilotable de chaque ensemble, ledit arrangement étant répété pour répartir les projecteurs pilotables en azimut autour de l'axe central des récipients.

Selon une autre variante avantageuse de réalisation, les ensembles de projecteurs comportent plusieurs sous-ensembles comportant chacun au moins six projecteurs et avec chacun un angle d'élévation de valeur absolue différente d'au moins 5°.

Avantageusement, chaque ensemble comporte au moins six projecteurs avec des directions de faisceau présentant en azimut, une incidence sur la tranche de récipient tangentielle horaire, et au moins six projecteurs avec des directions de faisceau présentant en azimut une incidence sur la tranche de récipient tangentielle antihoraire.

Par exemple, le support délimite le volume libre avec une largeur telle que les projecteurs positionnés à la même hauteur que le volume libre, ont une direction de faisceau ayant des angles d'azimut entre +5° et +175 ° et entre +185° et +355°.

Selon un exemple préféré de mise en oeuvre, le support délimite le chemin de circulation pour une tranche des récipients correspondant à la bague ou au fond des récipients.

Pour détecter notamment des glaçures horizontales, plusieurs groupements d'au moins six projecteurs sont montés par une liaison complète sur le support en étant situés en dehors du volume libre, les projecteurs d'un groupement illuminant une tranche de récipient incluse dans une gamme de diamètres, la dite gamme étant différente d'un groupement à l'autre, les projecteurs d'un groupement étant activés sélectivement de façon synchronisée avec des imageurs associés durant chaque acquisition d'image par lesdits imageurs associés, de manière que tous les points de la circonférence de la tranche des récipients à inspecter sont éclairés par au moins un des projecteurs, les projecteurs d'un groupement ayant une direction de faisceau selon une élévation de même signe que l'élévation de l'axe optique des imageurs associés.

Typiquement, le support présente deux ouvertures aménagées diamétralement opposées selon un profil fixe et définissant l'entrée et la sortie du chemin de circulation des récipients et encadrant le volume libre.

Selon une caractéristique avantageuse de réalisation, le support comporte un système de positionnement pour les imageurs et les projecteurs, assurant pour chacun, une position unique, par rapport à un plan de référence du support, de la direction du faisceau du projecteur et de l'axe optique de l'imageur.

Selon un exemple préféré de réalisation, les systèmes de positionnement pour les imageurs et les projecteurs sont aménagés sur le support pour permettre leur montage sur la face externe du support, le support comportant une multitude de trous pour le passage de la lumière reçue par les imageurs et/ou émise par les projecteurs.

Avantageusement, le support est un corps indéformable creux possédant la forme d'un polyèdre ou d'au moins une sphère tronquée.

Un autre objet de l'invention est de proposer une installation d'inspection comportant :
- au moins un poste d'inspection conforme à l'invention ;
- et au moins un système de transport adapté pour assurer le défilement, sans rotation, des récipients selon uniquement une direction de translation rectiligne, dans le chemin de circulation de chaque support.

Selon une variante de mise en oeuvre, l'installation d'inspection selon l'invention comporte :
- un poste d'inspection des bagues des récipients pourvu d'un support délimitant un chemin de circulation pour une tranche des récipients correspondant à la bague, et/ou ;
- un poste d'inspection des corps des récipients pourvu d'un support délimitant un chemin de circulation pour une tranche des récipients correspondant au corps, et/ou ;
- un poste d'inspection des fonds des récipients pourvu d'un support délimitant un chemin de circulation pour une tranche des récipients correspondant au fond.

Selon une telle installation, un dispositif de réglage permet de faire coïncider le plan de référence d'inspection des récipients déplacés par le système de translation avec le plan de référence du support.

Un autre objet de l'invention est de proposer un procédé pour détecter des défauts de type glaçures dans au moins une tranche de récipients possédant un axe central, le procédé étant tel que :
- un nombre déterminé de gammes de diamètres pour les tranches des récipients à inspecter est choisi ;
- les récipients sont déplacés sans rotation autour de leur axe central selon uniquement une direction de translation rectiligne pour défiler dans un chemin de circulation d'un support comprenant successivement, une entrée, une zone d'inspection et une sortie pour les récipients ;
- des projecteurs et des imageurs sont montés par une liaison complète sur le support de manière à fixer, par rapport au support, les directions de faisceau des projecteurs et les axes optiques des imageurs, ce support comportant un volume libre englobant au moins le volume engendré par le profil des récipients selon uniquement la translation rectiligne des récipients dans la zone d'inspection, les imageurs et les projecteurs étant situés en dehors de ce volume libre ;
- au moins six imageurs formant des images et possédant un axe optique dirigé vers l'intérieur de la zone d'inspection sont montés sur le support de manière que leurs axes optiques sont répartis autour de l'axe vertical des récipients en choisissant leurs angles d'azimut entre 0 et 360° par rapport à la direction de translation, de sorte que tous les points de la circonférence de la tranche des récipients soient représentés dans au moins une image acquise durant la traversée de la zone d'inspection par la tranche de récipient, les imageurs possédant des axes optiques dont les angles d'élévation sont de valeur absolue prise entre 0° et 90°, et de signe opposé aux angles d'élévation des directions de faisceau des projecteurs associés ;
- les projecteurs forment plusieurs ensembles comportant chacun au moins six projecteurs dont la direction de leur faisceau est tangente à un cylindre de diamètre centré sur l'axe central du récipient et inclus dans une gamme de diamètres déterminée, ces gammes de diamètres étant différentes d'un ensemble à l'autre et fonction du diamètre de la tranche des récipients ;
- les projecteurs des ensembles possèdent une direction de faisceau avec des angles d'élévation de valeur absolue prise entre 10° et 45°, et de signe opposé aux angles d'élévation des axes optique des imageurs associés, les directions de faisceau étant réparties en azimut de manière que lorsque les projecteurs sont activés successivement pour des acquisitions d'image par les imageurs associés, tous les points de la circonférence de la tranche des récipients sont éclairés par au moins un des projecteurs ;
- lors d'une phase d'inspection des récipients dont le diamètre de la tranche des récipients est inclus dans la gamme de diamètres d'un ensemble, les au moins six imageurs sont activés sélectivement et simultanément avec les projecteurs associés dudit ensemble pour acquérir au moins six images de chaque récipient traversant la zone d'inspection en vue de leur analyse pour détecter des défauts

Le procédé selon l'invention comporte avantageusement une phase de réglage durant laquelle, en fonction au moins de la gamme de diamètres pour les tranches des récipients à inspecter :
- on enregistre dans tous les imageurs leur propre liste de jeux de paramètres d'acquisition, lesdits jeux de paramètres d'acquisition incluant un temps d'intégration, un gain, les coordonnées d'une ROI, et/ou une information inhibant l'acquisition ;
- on enregistre dans tous les projecteurs sa propre liste de jeux de paramètres d'illumination, lesdits jeux de paramètres d'illumination incluant un temps et/ou une intensité lumineuse, et/ou une information inhibant l'illumination.

Selon un autre aspect du procédé, lors de la phase d'inspection de chaque récipient :
- on adresse simultanément d'une part, à des imageurs au moins un premier signal qui déclenche pour chacun l'acquisition d'images selon un jeu de paramètres d'acquisition pris dans sa propre liste de jeux de paramètres d'acquisition, et d'autre part, à des projecteurs un signal qui déclenche l'illumination du récipient par chaque projecteur selon un jeu de paramètres d'illumination pris dans sa propre liste de jeux de paramètres d'illumination , un des paramètres pouvant signifier qu'aucune illumination n'est faite ;
- on adresse simultanément décalé dans le temps, d'une part, à des imageurs au moins un deuxième signal qui déclenche une autre acquisition d'images selon un autre jeu de paramètres d'acquisition pris dans la liste de chaque imageur, et d'autre part, à des projecteurs, un deuxième signal qui déclenche l'illumination du récipient par les projecteurs selon un autre jeu de paramètres d'illumination.

### Brève description des dessins

[Fig. 1A]La figure 1A est une vue schématique montrant un exemple de réalisation d'une partie d'une installation selon l'invention, transversalement par rapport à une direction de déplacement des récipients.
[Fig. 1B]La figure 1B est une vue schématique montrant un autre exemple de réalisation d'une partie d'une installation selon l'invention, transversalement par rapport à une direction de déplacement des récipients.
[Fig. 1C]La figure 1C est une vue schématique dans le plan vertical montrant un exemple de réalisation d'une partie d'une installation selon l'invention, prise selon la direction de déplacement des récipients.
[Fig. 1D]La figure 1D est une vue schématique de dessus montrant un exemple de réalisation d'une partie d'une installation selon l'invention, prise dans le plan horizontal.
[Fig. 2]La figure 2 est une vue schématique en coupe montrant un exemple d'un récipient inspecté.
[Fig. 3A]La figure 3A est une vue en perspective montrant la présence d'une glaçure verticale au niveau de la bague d'un récipient.
[Fig. 3B]La figure 3B est une vue de dessus montrant le principe de détection de la glaçure verticale illustrée à la figure 3A.
[Fig. 3C]La figure 3C est une coupe élévation prise selon les lignes C-C de la figure 3A, montrant le principe de détection de la glaçure verticale.
[Fig. 3D]La figure 3D est une vue en perspective explicitant le positionnement des projecteurs par rapport à un récipient.
[Fig. 3E]La figure 3E est une vue dans le plan horizontal explicitant le positionnement des projecteurs par rapport à un récipient.
[Fig. 3F] La figure 3F est une vue explicitant l'éclairage en azimut des projecteurs par rapport à un récipient.
[Fig. 3G]La figure 3G est une vue analogue à la figure 3F explicitant le positionnement en azimut des projecteurs pour l'éclairage avec incidences tangentielles, de la circonférence de récipients avec des diamètres de tranches différents.
[Fig. 4]La Figure 4 est une vue schématique en perspective montrant le volume traversé ou engendré par les récipients au cours de leur déplacement linéaire dans un poste d'inspection.
[Fig. 5]La Figure 5 est une vue schématique en perspective montrant un exemple de montage sur un support dans un poste d'inspection, des projecteurs et des imageurs.
[Fig. 6]La figure 6 est une vue en coupe élévation du poste d'inspection illustré à la figure 5.
[Fig. 7] La figure 7 est une vue de dessus du poste d'inspection illustré à la figure 5.
[Fig. 8A]La Figure 8A est une vue schématique en élévation d'un récipient montrant des exemples de glaçures verticales et horizontale.
[Fig. 8B]La Figure 8B est une vue schématique de dessous d'un fond d'un récipient illustrant des exemples de glaçures au fond de type radial et circulaire.
[Fig.8C]La Figure 8C est une vue schématique de dessous montrant le principe d'éclairage et d'observation pour la détection de glaçures au fond des récipients.
[Fig.8D]La Figure 8D est une vue schématique de dessous montrant un principe d'éclairage et d'observation avec une série de projecteurs pour la détection de glaçures au fond des récipients.
[Fig. 9]La Figure 9 est une vue schématique montrant un exemple de réalisation d'un circuit de commande pour des imageurs.
[Fig. 10]La Figure 10 est une vue schématique montrant un exemple de réalisation d'un circuit de commande pour des projecteurs.

### Description des modes de réalisation

Tel que cela ressort des Figures notamment 1A et 1B, l'objet de l'invention concerne une machine I pour inspecter en ligne des récipients 2 vides, en verre appartenant à une série, en vue de déceler d'éventuels défauts D de type glaçure. La machine I comporte ainsi un ou plusieurs postes d'inspection I1, I2, ... présentant chacun une zone d'inspection Zi dans chacun desquels les récipients 2 sont amenés à défiler selon une direction de translation F, à l'aide d'un système de transport II de tous types connus en soi. Comme cela sera expliqué dans la suite de la description, les récipients 2 sont entraînés uniquement selon une translation rectiligne, sans un mouvement de rotation autour d'eux-mêmes.

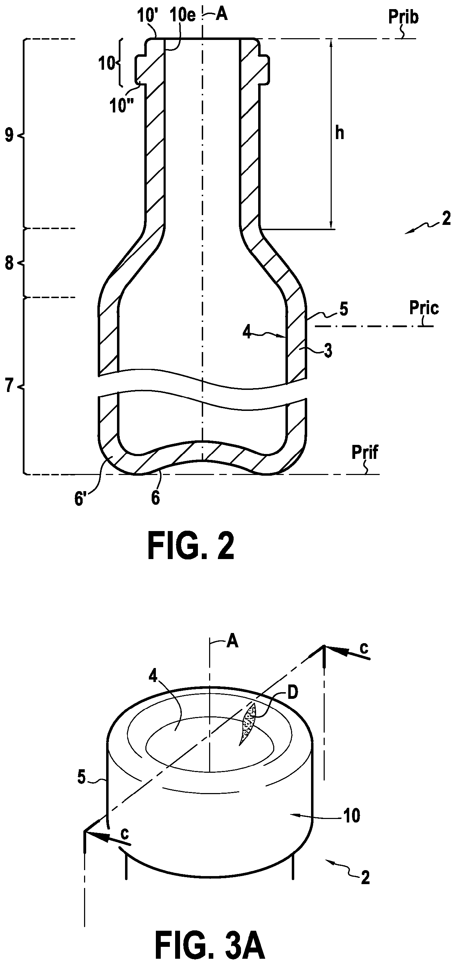

De manière générale, un récipient 2 présente un axe central A, considéré comme un axe de symétrie, voire un axe de symétrie de révolution. Ainsi comme illustré à la Fig. 2, un récipient 2 présente une paroi de verre 3 délimitée intérieurement par une surface interne 4 et extérieurement par une surface externe 5. De manière classique, un récipient 2 est un objet creux dont la paroi 3 forme, de bas en haut le long de l'axe central A, un fond 6 raccordé à un talon 6' à partir duquel s'élève un corps 7 se prolongeant par une épaule 8 raccordée à un goulot ou col 9 terminé par une bague 10 délimitant l'embouchure 10e permettant de remplir ou de vider le récipient.

Dans le cas des bouteilles et de certains flacons, par opposition aux pots, le goulot 9 correspond à une portion de diamètre rétrécit du récipient par rapport au corps 7. L'épaule 8 est une portion de raccordement entre le corps 7 et le goulot 9. Pour certains pots et certains autres flacons, l'épaule 8 raccorde directement le corps 7 à la bague 10. La partie supérieure du goulot 9 est formée par la bague qui comprend la surface de bague 10', qui est une face transversale, perpendiculaire à l'axe de central A du récipient, à l'extrémité supérieure de la bague 10. La bague 10 comprend généralement une collerette 10" qui est en saillie radialement vers l'extérieur par rapport au goulot 9. L'extrémité inférieure d'une telle collerette 10" forme une surface annulaire transversale tournée axialement vers le bas, appelée contre-bague, et qui délimite l'extrémité inférieure de la bague 10.

L'axe central A est considéré comme un axe de symétrie pour les récipients de section ronde, en considérant une répartition de verre parfaite uniforme et idéale par rapport au plan de conception du récipient. Evidemment, les récipients réels ne sont pas strictement symétriques. La répartition du verre est quelque peu hétérogène. Certains récipients portent des décors en relief ou des filets de bague, etc. Enfin de nombreux modèles de récipients dits « articles de forme » ont un corps de section non ronde. Dans la plupart des cas, même pour les articles de forme, l'axe central A correspond à un axe orthogonal au plan définissant la surface de bague 10' et centré sur l'embouchure 10e qui est circulaire.

La surface de bague 10' définit un plan supérieur dit plan de référence d'inspection de bague Prib, perpendiculaire à l'axe central A. Le fond 6 du récipient 2 définit un plan inférieur dit plan de référence d'inspection du fond du récipient Prif, perpendiculaire à l'axe central A. De même, il peut être défini un plan médian dit plan de référence d'inspection du corps Pric, perpendiculaire à l'axe central A. Ces plans de référence d'inspection Prif, Prib, Prie sont parallèles au plan de convoyage Pc des récipients.

Conformément à l'invention, dans au moins chacun des postes d'inspection de l'installation 1, les récipients 2 sont transportés dans un plan de convoyage Pc horizontal à l'aide d'un système de transport II de tous types connus en soi. Il est à noter que sur les lignes de fabrication, en amont et en aval des différents postes d'inspection I1, I2, ..., les récipients 2 sont transportés par leur fond reposant sur des convoyeurs à palettes ou à chaîne. La surface de la chaîne définit le plan de convoyage généralement horizontal. Les récipients sont amenés dans les postes d'inspection par des convoyeurs dits d'entrée puis redéposés après inspection, sur un convoyeur dit de sortie, les convoyeurs d'entrée et de sortie ayant le même plan de convoyage. Ce plan de convoyage est très généralement horizontal, et durant le convoyage, l'axe central des récipients reposant sur leur fond reste vertical. Il est envisageable pour des raisons de configuration des usines, que le plan de convoyage ait une faible inclinaison par rapport à l'horizontal, par exemple les convoyeurs montent. Evidemment, les postes d'inspection s'adaptent à ces configurations lors de leur installation sur la ligne. Par convention, il est considéré que le plan de convoyage est horizontal et l'axe central des récipients est vertical.

Dans la présente demande, la direction de déplacement F des récipients 2 s'établit selon un axe horizontal X d'un repère X, Y, Z comportant un axe vertical Z perpendiculaire à l'axe horizontal X et un axe transversal Y perpendiculaire à l'axe vertical Z et à l'axe horizontal X, et X et Y étant dans un plan parallèle à un plan de convoyage Pc des récipients qui est horizontal.

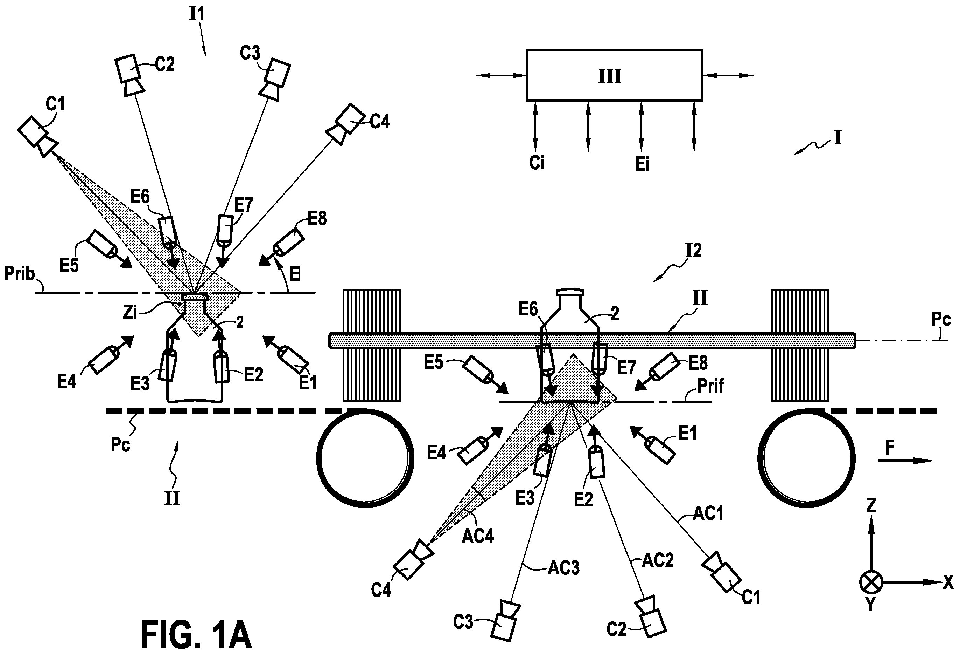

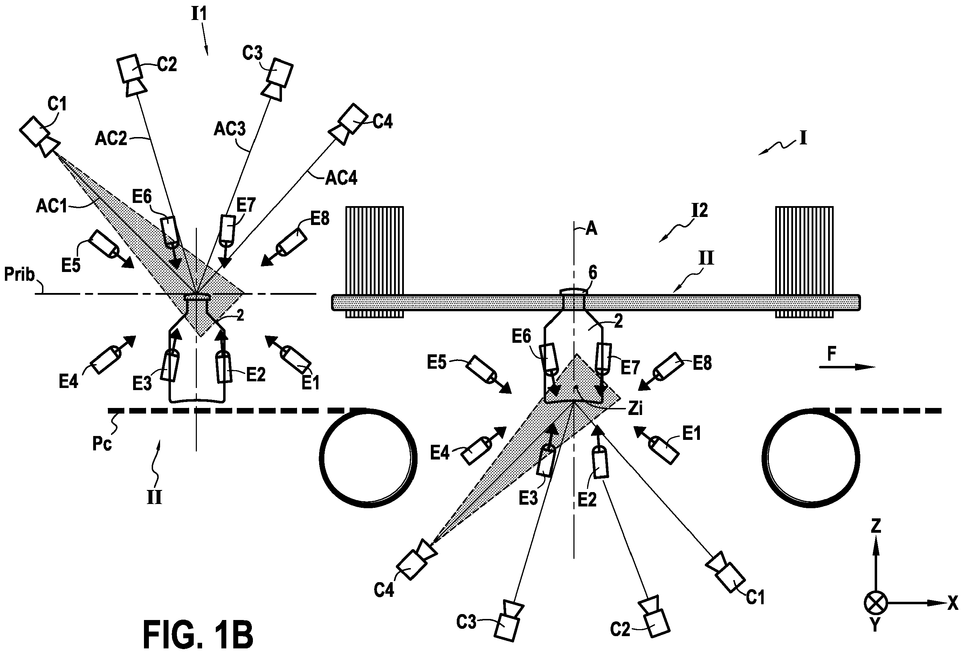

Les récipients 2 sont amenés à défiler selon uniquement une trajectoire rectiligne horizontale dans chaque poste d'inspection I1, I2, ... à l'aide du système de transport II qui par ailleurs ne doit pas entraver l'inspection des récipients. Par exemple dans le cas de l'inspection de la bague des récipients (partie gauche de la figure 1A), le système de transport II est un tapis de convoyage sur lequel les récipients 2 reposent par leur fond 6 alors que dans le cas de l'inspection du fond 6 des récipients (partie droite de la figure 1A), le système de transport II est réalisé sous la forme d'un convoyeur muni de paires de courroies latérales opposées enserrant le corps afin d'assurer un maintien par contact avec le corps 7 des récipients 2 ou sous la forme d'un convoyeur semblable qui assure un maintien par contact avec le goulot des récipients, par exemple avec la contre-bague 10" (partie droite de la figure 1B). Les récipients 2 sont ainsi transportés dans un plan horizontal de convoyage Pc parallèle au plan défini par l'axe horizontal X et l'axe transversal Y. La translation est selon la direction F parallèle à l'axe X du repère choisi par convention.

Dans l'exemple illustré à la figure 1A, l'installation 1 comporte successivement un poste d'inspection I1 de la bague des récipients (partie gauche de la figure 1A) et un poste d'inspection I2 du fond 6 des récipients (partie droite de la figure 1A). Bien entendu, cet exemple est donné uniquement à titre d'illustration, l'installation 1 pouvant comporter un nombre différent de postes d'inspection et des postes pour inspecter d'autres régions des récipients comme le corps par exemple.

Dans chacun des postes d'inspection I1, 12, ... les récipients 2 ne sont pas soumis à une rotation contrôlée autour de leur axe central A. On entend par là qu'il est possible qu'une rotation des récipients autour de leur axe central A puisse survenir, mais de manière non contrôlée, par exemple par la faute d'un contact avec des guides stationnaires du système de transport. De préférence, dans chacun des postes d'inspection, et surtout dans les zones d'inspection, les récipients 2 sont immobiles en rotation autour de leur axe central A, tout en se déplaçant le long de la trajectoire de déplacement F. De préférence, dans chacun de ces postes d'inspection, les récipients 2 ne subissent pas, en fonctionnement, d'arrêt de leur déplacement selon la trajectoire de déplacement. Cependant, il est généralement utile, voire nécessaire, de maîtriser l'espacement entre les récipients, autrement dit l'intervalle libre entre deux récipients 2 successifs en défilement dans l'installation.

Pour ce faire, si l'espacement des récipients en amont de l'installation est insuffisant, on peut utiliser un dispositif espaceur installé sur la trajectoire de déplacement des récipients. Un tel dispositif espaceur, qui est connu par ailleurs et non décrit ici, fonctionne en créant une accélération des récipients, de préférence en amont du premier poste d'inspection de l'installation. Ainsi, une fois espacés en amont de l'installation, il n'est pas nécessaire en fonctionnement que les récipients ne subissent ni accélération ou ni décélération de leur déplacement selon la trajectoire de déplacement. Le déplacement des récipients est alors stable et évite les incidents, collisions, chutes et accumulations, ce qui assure une cadence de production stable avec un débit optimal.

De préférence, la trajectoire déterminée par le système de transport II est aussi rectiligne entre les postes d'inspection, donc rectiligne le long de toute la ligne de contrôle. Ainsi selon l'invention, les récipients peuvent défiler durant l'inspection de détection des glaçures, en mouvement rectiligne uniforme, car l'invention n'impose aucune rotation, accumulation, accélération ou décélération. Cependant, l'invention n'exclut pas la présence d'un changement de trajectoire ou de direction de trajectoire entre deux postes. De même, l'invention n'exclut pas la présence d'un dispositif de type table de stockage entre deux postes où des récipients peuvent être accumulés.

En sortie de leur fabrication, les récipients 2 en verre sont inspectés sans contact, par des rayons lumineux, en vue de détecter des défauts de type glaçures par une installation I conforme à l'invention comportant un ou plusieurs postes d'inspection I1, 12, ... visant à contrôler des régions spécifiques des récipients, qui seront désignées par la suite, par tranches de récipients ou tranches de récipients à inspecter. Une tranche de récipient à inspecter correspond à la partie de la paroi du récipient s'étendant à partir d'un plan perpendiculaire à l'axe central A du récipient et sur une hauteur limitée prise selon l'axe central A. Par exemple, il peut être prévu d'inspecter comme tranches du récipient, la bague 10 s'étendant à partir du plan de surface de bague, le fond 6 s'étendant à partir d'un plan de pose, au moins une partie du corps 7 ou l'épaule 8 du récipient s'étendant de part et d'autre d'un plan perpendiculaire à l'axe normal A, ou bien se trouvant comprise entre deux plans perpendiculaires à l'axe normal A.

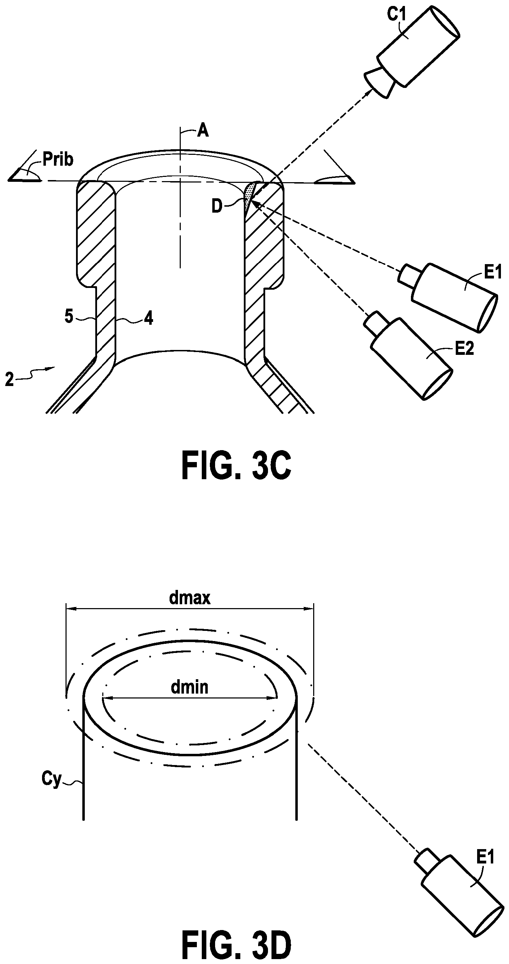

Les glaçures sont des défauts qui ont la forme de fissures de faibles épaisseurs s'étendant généralement depuis la surface dans l'épaisseur de la paroi du récipient. Une glaçure peut être une fissure traversante sur l'épaisseur de la paroi, allant alors de la surface interne 4 à la surface externe 5 de la paroi. Cependant, elle est généralement une fissure non-traversante D qui débouche généralement dans la surface externe 5 ou comme illustré aux figures 3A à 3C, à la surface interne 4. Une glaçure étant une fissure, on peut la considérer comme étant délimitée par deux éléments de surface du matériau de la paroi du récipient. Ces deux éléments de surface se font face et peuvent être généralement considérés comme étant parallèles l'un à l'autre, séparés par une couche fine, voire infinitésimale, d'air. Ces deux éléments de surface quasiment parallèles sont deux dioptres de sorte que les glaçures réfléchissent la lumière qui arrive avec une certaine incidence sur ces surfaces, selon les lois de la réflexion spéculaire. C'est pourquoi les récipients en verre sont généralement inspectés par réflexion de faisceaux de lumière sur les glaçures.

Ces éléments de surface, qui sont généralement non-plans, donc gauches, peuvent avoir des configurations et des orientations très variées par rapport à la zone de paroi de récipient dans laquelle la glaçure s'est formée. Dans le matériau amorphe, les fissures ne se propagent pas selon des plans de clivage. Les glaçures ont toutefois des formes et des orientations générales privilégiées correspondant aux directions des contraintes qui se sont relâchées dans la fissure. Pour définir une convention de l'orientation d'une glaçure, on doit d'abord faire une approximation en considérant que ces éléments de surface peuvent être approximés par un plan d'approximation ou par une série de plans d'approximation.

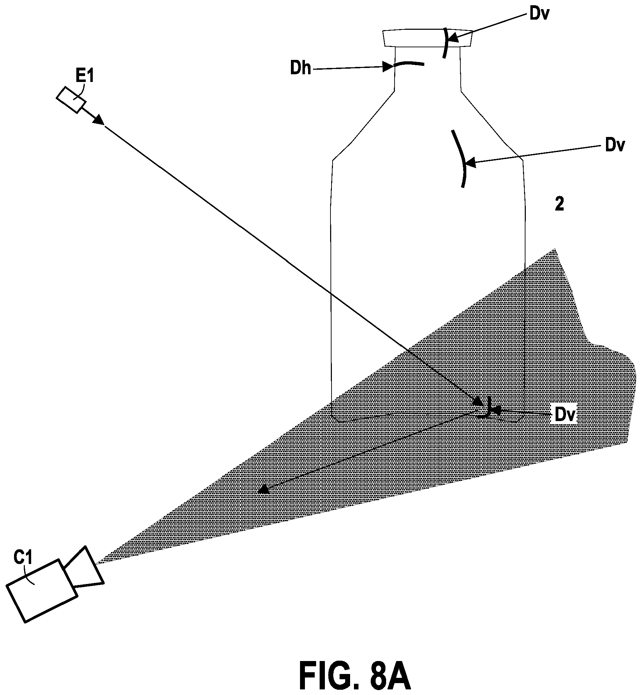

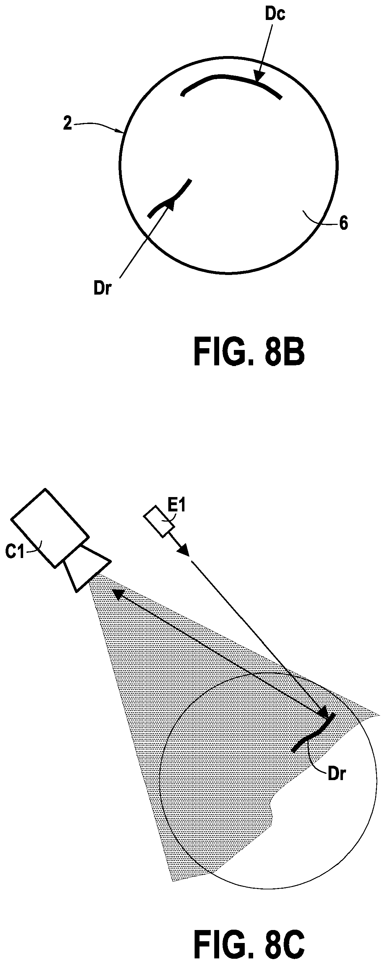

Dans le domaine des récipients en verre, l'homme du métier a pour habitude de distinguer, pour les portions cylindriques ou coniques des récipients, donc le goulot, le col, l'épaule, le corps et le jable, des glaçures dites verticales et des glaçures dites horizontales, en fonction de l'orientation principale des fissures par rapport à l'axe central A du récipient 2 qui est considéré comme vertical. Les glaçures dites verticales ont donc des éléments de surfaces ayant un plan d'approximation vertical ou présentant une inclinaison par rapport à verticale qui est inférieure à 45 degrés d'angle, de préférence inférieure à 30 degrés d'angle. L'inclinaison d'un plan par rapport à la verticale est définie comme l'angle aigu entre une normale à ce plan et un plan horizontal. On note qu'un plan vertical peut être un plan radial contenant l'axe central du récipient ou un plan parallèle à cet axe et formant un angle avec un tel plan radial. Des exemples de glaçures dites verticales Dv sont illustrés à la figure 8A. Les glaçures dites horizontales ont donc des éléments de surfaces ayant un plan d'approximation horizontal ou présentant une inclinaison par rapport à l'horizontale qui est inférieure à 45 degrés d'angle, de préférence inférieure à 30 degrés d'angle. L'inclinaison d'un plan par rapport à l'horizontale est définie comme l'angle aigu entre une normale à ce plan et la direction verticale. Un exemple de glaçure dite horizontale Dh est illustré à la figure 8A.

Concernant les glaçures situées dans le fond des récipients, qui peut prendre la forme d'un disque ou un cône, on peut distinguer, comme illustré à la figure 8B, les glaçures radiales Dr qui s'étendent radialement dans le fond et des glaçures circulaires De qui s'étendent en arc de cercle dans le fond des récipients. Bien entendu d'autres glaçures ont des formes réelles quelconques.

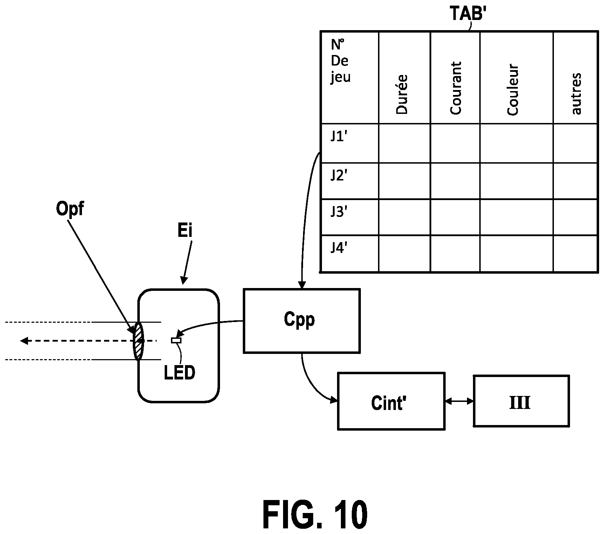

Le principe bien connu de détection des défauts de type glaçure qui est mis en oeuvre par l'installation de détection conforme à l'invention repose sur la détection de la réflexion spéculaire d'un faisceau incident. Par réflexion spéculaire on entend une réflexion d'un faisceau de lumière sur une surface réfléchissante à la manière d'un miroir, donc avec une diffusion nulle ou négligeable, avec l'angle réfléchi égal à l'angle incident. Ainsi, chaque poste de détection I1, I2,... comporte des émetteurs lumineux directifs pilotables E1, E2,...Ei,...En, éclairant les récipients dont les réflexions spéculaires provenant des glaçures sont détectées par des caméras ou des têtes de prise de vues pilotables C1, C2,...Ci,...Cn, comme cela sera décrit en détail dans la suite de la description (figure 8A à 8D, 10C).

Au moins pour la détection des glaçures verticales ou radiales, il est généralement utilisé des émetteurs lumineux directifs E1, E2,...Ei,...En, émettant chacun un faisceau lumineux directif selon une direction de faisceau déterminée DE1, DE2,...DEi,...DEn. Un faisceau incident directif est un faisceau de rayons lumineux ayant un axe ou direction de faisceau et dont les rayons sont contenus dans un angle solide d'éclairage autour de cet axe de faisceau, l'angle solide étant faible. L'angle solide du faisceau est l'angle solide par exemple d'un cône de section circulaire qui contient tous les rayons lumineux du faisceau. Pour simplifier, on convient de définir non pas l'angle solide en stéradian, mais l'angle de divergence du faisceau incident, dans un plan de mesure de divergence qui est un plan de section de l'angle solide contenant l'axe de l'angle solide. Généralement, on utilise un faisceau incident ayant, dans la zone d'inspection, un angle de divergence qui est inférieur à 30 degrés d'angle, de préférence inférieur à 25 degrés d'angle, encore plus préférentiellement inférieur à 20 degrés d'angle. Un faisceau incident directif peut être un faisceau laser ou autre faisceau à rayons parallèles défini par un axe de faisceau et un diamètre de faisceau. Un faisceau incident étroit peut être un faisceau de rayons divergents, ou un faisceau de rayons convergents dans la zone d'inspection.

De la sorte, un élément de surface du récipient qui est éclairé par un émetteur lumineux directif, en reçoit un faisceau comprenant des rayons lumineux selon des angles incidents proches, autrement dit des angles incidents dont la différence est inférieure à 30 degrés, voire 25 degrés, voire 20 degrés : c'est en ce sens qu'ils sont dits directifs. Plusieurs émetteurs lumineux directifs qui illuminent une même portion de la surface externe du récipient permettent d'obtenir des angles incidents différents de ceux issus d'un autre émetteur lumineux directif, les angles incidents étant adaptés à la mise en évidence de glaçures d'orientation variables par rapport à la surface externe du récipient.

La tranche de récipient qui est située dans la zone d'inspection et qui se trouve ainsi éclairée par un émetteur lumineux directif donné, peut être comprise dans un cercle ayant un diamètre allant de 5 millimètres à 14 millimètres. Selon d'autres variantes, la tranche de récipient qui se trouve ainsi éclairée par un émetteur lumineux directif donné, peut être comprise dans un cercle ayant un diamètre allant de 5 millimètres à 120 millimètres. La tranche du récipient qui est éclairée peut être rectangulaire, ayant par exemple une largeur horizontale allant jusqu'à 100 ou 120 millimètres pour couvrir une bague entière, et par exemple 60 millimètres de hauteur pour couvrir la hauteur d'une bague. Bien entendu, les bagues sont généralement des cylindres et l'on ne peut constater la section rectangulaire du faisceau qu'en imaginant un plan éclairé orthogonal à l'axe du faisceau, positionné au voisinage de la surface de bague ou de l'axe central du récipient dans la zone d'inspection.

Les rayons lumineux mis en oeuvre pour la détection sont dans le domaine photographique, de préférence avec une longueur d'onde comprise entre 100 nanomètres et 20 microns, plus préférentiellement dans le domaine photographique visible avec des longueurs d'ondes comprises entre 380 et 900 nanomètres.

Dans le cadre de la présente invention, l'installation d'inspection I comporte des émetteurs lumineux directifs dits pilotables E1, E2,...Ei,...En, appelés projecteurs dans la suite de la description par souci de simplification. L'allumage et l'extinction de ces projecteurs sont commandés électriquement par un système électronique III. Ainsi, la durée d'une impulsion de lumière émise ainsi que des caractéristiques optiques comme d'intensité ou de composition spectrale ou couleur de la lumière émise peuvent être contrôlées électriquement.

Un projecteur E1, E2,...Ei,...En comporte une source lumineuse et généralement un dispositif de conditionnement optique qui se termine par une surface d'émission de lumière par laquelle le faisceau lumineux est émis en direction de la tranche du récipient à inspecter. La source de lumière est par exemple une diode électroluminescente, un filament à incandescence, une source à arc électrique, ou une source fluorescente (néon, plasma, ...). Un dispositif de conditionnement peut comporter un ou plusieurs composants optiques parmi des lentilles optiques, des condenseurs optiques, des miroirs, des guides de lumière (notamment des fibres optiques), des iris, des masques, etc. Par masque, on entend une pièce opaque portant une découpe en son centre et destinée, par obstruction, à donner forme à un faisceau lumineux la traversant.

Généralement, un projecteur comporte un dispositif de conditionnement qui comporte au moins une lentille optique. Un projecteur peut comporter un dispositif de conditionnement comportant un masque situé de manière à être projeté en étant conjugué optiquement avec la surface ou une portion de surface du récipient, afin que la tranche du récipient à inspecter soit délimitée. Un masque rectangulaire permet que la tranche du récipient à inspecter soit rectangulaire. Le masque ou diaphragme, définit donc la forme de la section transversale du faisceau qui prend une forme rectangulaire ou circulaire. Cette section s'observe par exemple en sectionnant le faisceau par un plan virtuel orthogonal à la direction de faisceau. On peut donc considérer que le faisceau lumineux est délimité par une enveloppe de section conique ou pyramidale. La source de lumière et les composants optiques du dispositif de conditionnement optique sont des éléments optiques du projecteur. On pourra prévoir qu'un, ou plusieurs, ou tous les projecteurs de l'installation aient leur propre source lumineuse individuelle. Cependant, on peut prévoir que plusieurs projecteurs partagent une source lumineuse commune. Dans ce cas, ils pourront avoir chacun leur propre dispositif de conditionnement, se terminant par une surface d'émission de lumière individuelle, même si les dispositifs de conditionnement de plusieurs émetteurs peuvent comporter un ou plusieurs composants optiques communs en amont de leur surface d'émission de lumière individuelle. Typiquement, une source commune peut être associée à un faisceau de fibres optiques comportant plusieurs fibres optiques, parmi lesquelles chaque fibre optique, ou chacun de plusieurs groupes de fibres optiques, appartient au dispositif de conditionnement d'un projecteur distinct. Un projecteur comporte généralement une surface d'émission de lumière de petite taille. La surface d'émission des projecteurs est de préférence inscrite dans un cercle de diamètre comprise entre 4 millimètres et 30 millimètres. On pourra utiliser une conception des projecteurs spécifique décrite plus loin dans la description afin de contrôler électriquement les paramètres d'éclairage tels que la couleur, et/ou le temps d'allumage et/ou l'intensité lumineuse.

Du fait du caractère varié et largement aléatoire de l'orientation des glaçures, et du fait de l'utilisation de faisceaux incidents directifs au moins pour les glaçures verticales, il est nécessaire de prévoir plusieurs faisceaux incidents directifs et au moins un récepteur lumineux pour pouvoir détecter une éventuelle glaçure dans la région à inspecter du récipient. Généralement, plusieurs récepteurs lumineux sont prévus pour recueillir la réflexion spéculaire d'un faisceau incident sur les glaçures.

Ces récepteurs lumineux ou têtes de prise de vues pilotables tels que des caméras sont désignés dans la suite de la description, par imageurs C1, C2,...Ci,...Cn. Dans le cadre de la présente invention, ces imageurs sont commandés électriquement par le système électronique III permettant de piloter les instants des prises de vues et leurs paramètres d'acquisition. On pourra utiliser une conception spécifique des imageurs décrite plus loin dans la description afin de contrôler électriquement les paramètres d'acquisition tels que la région d'intérêt, et/ou le temps d'intégration et/ou le gain électronique. Typiquement, un imageur C1, C2,...Ci,...Cn possède un axe optique respectivement AC1, AC2,...ACi,...ACn dirigé vers l'intérieur de la zone d'inspection Zi et un champ de vision couvrant tout ou partie de la tranche des récipients à inspecter. Un imageur C1, C2,...Ci,...Cn comporte un capteur lumineux et généralement un dispositif de conditionnement optique associé qui se termine par une surface d'entrée de lumière par laquelle les rayons lumineux collectés entrent dans le récepteur lumineux en direction du capteur lumineux. Le capteur lumineux est par exemple un capteur photoélectrique, qui peut être par exemple de type CCD ou de type CMOS. Un dispositif de conditionnement optique peut comporter un ou plusieurs composants optiques parmi des lentilles optiques, des miroirs, des guides de lumière (notamment des fibres optiques), des diaphragmes fixes tels que des masques ou réglables tels que des diaphragmes à iris, etc. En d'autres termes, la zone sensible du capteur lumineux peut être agencée à distance de la surface d'entrée de lumière du récepteur lumineux, et peut de plus présenter une orientation différente. Le dispositif de conditionnement forme une image de la tranche du récipient à inspecter ou d'une partie de la tranche du récipient à inspecter, sur le capteur lumineux, généralement une image linéaire ou bidimensionnelle. Il conjugue optiquement au moins une partie de surface externe du récipient avec la surface sensible du capteur. Il définit aussi l'axe optique ou l'axe de vision AC1, AC2,...ACi,...ACn de l'imageur C1, C2,...Ci,...Cn.

Le capteur lumineux et les composants optiques du dispositif de conditionnement optique sont des éléments optiques de l'imageur C1, C2,...Ci,...Cn. On pourra prévoir qu'un, ou plusieurs, ou tous les imageurs C1, C2,...Ci,...Cn d'un poste d'inspection aient leur propre capteur lumineux individuel. Cependant, on peut prévoir que plusieurs imageurs partagent un capteur lumineux commun. Dans ce cas, les imageurs à capteur lumineux commun pourront avoir chacune leur propre dispositif de conditionnement optique, se terminant par une surface d'émission d'entrée individuelle, même si les dispositifs de conditionnement de plusieurs caméras peuvent comporter un ou plusieurs composants optiques communs en aval de leur surface d'entrée de lumière individuelle. Dans la variante préférée de réalisation, tous les imageurs sont équipés de capteurs d'image bidimensionnels de type CCD ou CMOS, et d'un objectif en tant que dispositif de conditionnement, l'ensemble formant ce qu'on appelle couramment une caméra matricielle.

Conformément à l'invention, dans un poste d'inspection I1, I2,..., les projecteurs E1, E2,...Ei,...En, et les imageurs C1, C2,...Ci,...Cn sont montés par une liaison complète 13, sur un support 14 formant un corps indéformable, de manière à fixer, par rapport au support 14, les directions de faisceau DE1, DE2,...DEi,...DEn, des projecteurs et les axes optiques AC1, AC2,...ACi,...ACn des imageurs. En d'autres termes, les directions de faisceau DE1, DE2,...DEi,...DEn, des projecteurs et les axes optiques AC1, AC2,...ACi,...ACn des imageurs sont figés par rapport à un plan de référence Prfs du support 14.

Il doit être compris que les projecteurs E1, E2,...Ei,...En, et les imageurs C1, C2,...Ci,...Cn sont montés sans possibilité de mouvements entre eux alors même que le poste permet une inspection des récipients 2 qui d'une part, se déplacent uniquement selon une translation rectiligne et d'autre part, présentent différentes tailles.

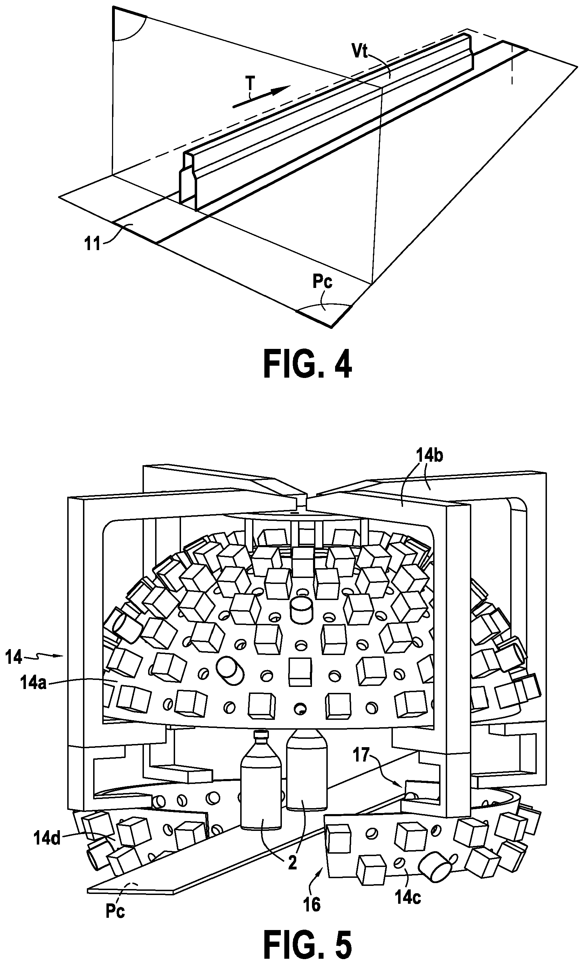

A cet effet, les projecteurs E1, E2,...Ei,...En, et les imageurs C1, C2,...Ci,...Cn sont montés sur le support 14 pour être situés en dehors d'un chemin de circulation des récipients correspondant au volume libre Vt englobant au moins le volume engendré par le profil des récipients 2 selon uniquement la translation horizontale des récipients dans la zone d'inspection Zi de chaque poste d'inspection. Tel que cela ressort de la figure 4, ce volume libre Vt correspond au moins au profil des récipients c'est-à-dire à la section des récipients prise dans le plan vertical Y, Z perpendiculaire au plan horizontal ou de convoyage Pc, cette section étant prise sur tout le déplacement rectiligne horizontal des récipients de la zone d'inspection. Bien entendu, ce volume libre Vt peut posséder une section avec des dimensions supérieures au profil des récipients. De cette façon, les projecteurs E1, E2,...Ei,...En, et les imageurs C1, C2,...Ci,...Cn, ne gênent pas le déplacement linéaire horizontale des récipients dans la zone d'inspection Zi.

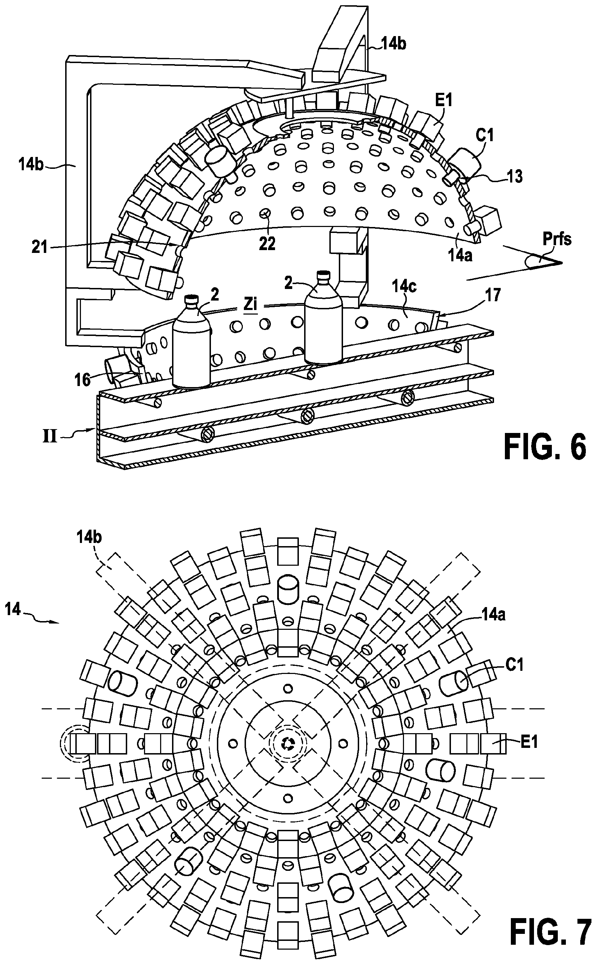

Tel que cela ressort plus précisément des figures 5 à 7, le support 14 est un corps indéformable creux traversé par le chemin de circulation Vt des récipients 2 de manière que les projecteurs E1, E2,...Ei,...En et les imageurs C1, C2,...Ci,...Cn se trouvent positionnés autour du chemin de circulation, avec les directions de faisceaux et les axes optiques dirigés vers l'intérieur du support 14 et plus précisément, vers le chemin de circulation Vt.

Ce support 14 peut être réalisé de toute manière appropriée pour constituer un corps indéformable creux. Bien entendu, il faut comprendre la notion de corps indéformable comme l'idéalisation de la notion de corps à l'état solide, considéré comme rigide et négligeant toute déformation. Ce support 14 peut être formé à partir d'une pièce unique ou de plusieurs pièces assemblées rigidement entre elles comme illustré à titre d'exemple sur les dessins.

Le support 14 présente la forme par exemple d'un polyèdre ou comme dans l'exemple illustré aux figures 5 à 7, d'une sphère tronquée avec plusieurs portions de sphère. Plus précisément, le support 14 comporte une coque 14a de la forme d'une demi-sphère reliée rigidement par des bras de liaison 14b, à deux coques complémentaires 14c et 14d se présentant sous la forme de tronçons de sphère provenant d'une sphère identique de celle formant la coque 14a. La forme sphérique du support 14 facilite le positionnement des zones de travail des têtes de prise de vue, c'est-à-dire qu'elle permet de placer la zone de mise au point de chaque imageur dans la zone d'inspection Zi.

Comme indiqué ci-dessus, le support 14 est adapté pour définir ou délimiter le chemin de circulation Vt pour les récipients. Le support 14 comporte à cet effet, une entrée 16, la zone d'inspection Zi et une sortie 17. L'entrée 16 et la sortie 17 correspondent à deux ouvertures aménagées dans le support 14 de façon diamétralement opposée et entre lesquelles s'étend la zone d'inspection Zi formée par le volume vide interne du support creux.

Le support 14 est adapté pour assurer un montage rigide efficace et facile pour les projecteurs E1, E2,...Ei,...En, et les imageurs C1, C2,...Ci,...Cn.

Le support 14 comporte un système de positionnement 21 pour chaque imageur C1, C2,...Ci,...Cn et chaque projecteur E1, E2,...Ei,...En, assurant pour chacun, une position unique, par rapport au plan de référence Prfs du support 14, de la direction du faisceau DE1, DE2,...DEi,...DEn de chaque projecteur et de l'axe optique AC1, AC2,...ACi,...ACn de chaque imageur. Un tel système de positionnement 21 permet de figer facilement par rapport au plan de référence Prfs du support 14, les directions de faisceau DE1, DE2,...DEi,...DEn, des projecteurs et les axes optiques AC1, AC2,...ACi,...ACn des imageurs. De tels systèmes de positionnement 21 peuvent être réalisés de toute manière appropriée et comporter par exemple, des méplats aménagés sur le support pour constituer chacun un logement de positionnement pour le boîtier des imageurs et/ou des projecteurs, et/ou des orifices aménagés dans le support pour recevoir des pions de centrage portés par les boîtiers des imageurs et/ou des projecteurs.

Selon l'exemple de réalisation illustré sur les dessins, les systèmes de positionnement 21 pour les imageurs et les projecteurs sont aménagés sur le support 14 pour permettre leur montage sur la face externe du support 14. Selon cet exemple, le support 14 comporte une multitude de trous 22 pour le passage de la lumière reçue par les imageurs C1, C2,...Ci,...Cn et/ou émise par les projecteurs E1, E2,...Ei,...En. Par exemple, les trous 22 ainsi que les systèmes de positionnement 21 sont régulièrement aménagés selon des parallèles de la sphère pour constituer des possibilités de montage pour les imageurs et les projecteurs. Bien entendu, les systèmes de positionnement 21 pour les imageurs et les projecteurs peuvent être aménagés sur le support 14 pour permettre leur montage sur la face interne du support 14.

Enfin, les projecteurs E1, E2,...Ei,...En, et les imageurs C1, C2,...Ci,...Cn sont assemblés de manière rigide sur le support 14, par une liaison complète 13, pouvant être réalisée de toute manière appropriée, comme par exemple, à l'aide de systèmes vis-écrous, de clips voire de moyens adhésifs. Ainsi, ces liaisons complètes assurent que les projecteurs E1, E2,...Ei,...En, et les imageurs C1, C2,...Ci,...Cn sont montés sans possibilité de mouvements par rapport au support 14.

Une telle conception facilite la mise en place initiale des projecteurs E1, E2,...Ei,...En, et des imageurs C1, C2,...Ci,...Cn mais également leurs montages et démontages lors des opérations de maintenance.

Les montages des projecteurs et des imageurs sur le support 14 sont tels que les axes optiques AC1, AC2,...ACi,...ACn des imageurs et les directions de faisceau DE1, DE2,...DEi,...DEn, des projecteurs sont définis par rapport au plan de référence Prfs du support 14. Avantageusement, chaque poste de détection comporte un dispositif de réglage permettant de faire coïncider le plan de référence d'inspection Prif, Prib ou Pric des récipients déplacés par le système de translation II des récipients, avec le plan de référence Prfs du support 14. Typiquement, ce dispositif de réglage peut permettre de déplacer verticalement le support 14 par rapport au plan de convoyage et/ou le plan de convoyage des récipients par rapport au support 14 de manière qu'en fonction de la hauteur des récipients 2 inspectés, le plan de référence d'inspection Prif, Prib ou Pric des récipients coïncide avec le plan de référence Prfs du support 14.

Bien entendu, la forme du support 14 est adaptée à la taille de l'ensemble des récipients pouvant être inspectés et au type des tranches des récipients à inspecter pour assurer leur inspection tout en permettant leur passage. La figure 1A permet d'illustrer deux configurations différentes pour les supports 14. Cette figure 1A illustre sur la partie gauche, un poste d'inspection pour la bague des récipients alors que la partie droite illustre un poste d'inspection pour le fond des récipients. L'inspection de ces deux parties de récipients conduit éventuellement à des dispositions différentes des imageurs et des projecteurs sur les supports 14 et par suite à une forme différente des supports 14.

D'une manière générale, l'installation 1 est à même de comporter successivement :
- un poste d'inspection des bagues des récipients pourvu d'un support 14 délimitant un chemin de circulation pour une tranche des récipients correspondant à la bague, et/ou ;
- un poste d'inspection des corps des récipients pourvu d'un support 14 délimitant un chemin de circulation pour une tranche des récipients correspondant au corps, et/ou ;
- un poste d'inspection des fonds des récipients pourvu d'un support 14 délimitant un chemin de circulation pour une tranche des récipients correspondant au fond.

Selon une caractéristique de l'invention, chaque poste d'inspection I1, I2,... conforme à l'invention est capable d'inspecter des récipients 2 dont les tranches à inspecter possèdent des diamètres différents qui sont classés dans des gammes différentes de diamètres. Pour un poste d'inspection, il est ainsi choisi l'étendue des diamètres des tranches et le nombre de gammes différentes. A titre d'exemple de réalisation non limitatif, un même poste d'inspection peut être conçu pour inspecter quatre gammes différentes de diamètres de tranches de récipients à savoir par exemple, 6 à 22 mm, 22 à 32 mm, 32 à 53 mm et 53 à 82 mm. Ces gammes de diamètres de tranches des récipients peuvent n'être pas parfaitement disjointes.

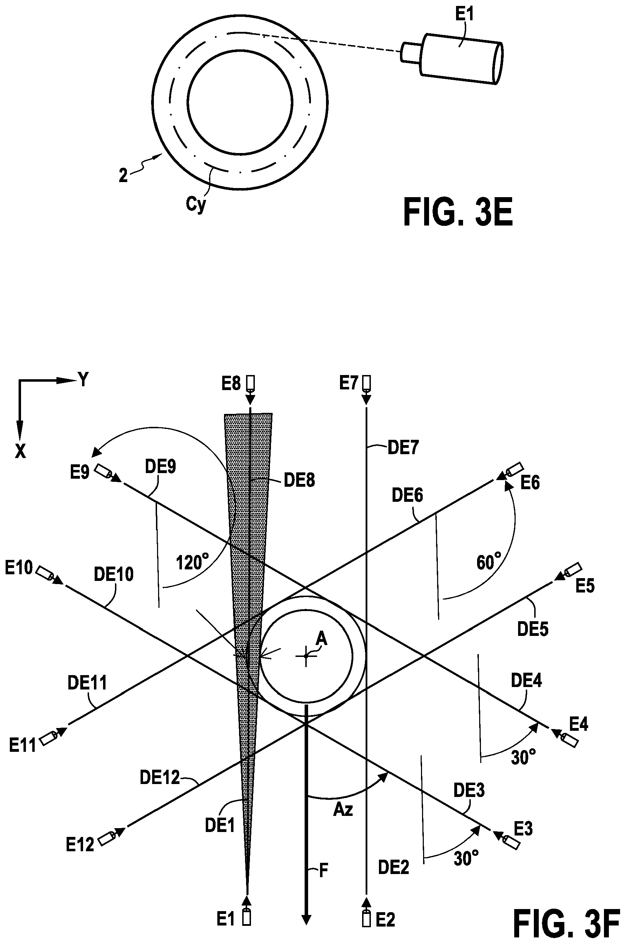

Selon une autre caractéristique de l'invention pour la détection des glaçures verticales, les projecteurs E1, E2,...Ei,...En forment plusieurs ensembles comportant chacun au moins six projecteurs dont la direction de leur faisceau DE1, DE2,...DEi,...DEn est tangente à un cylindre de diamètre inclus dans une gamme déterminée de diamètres de tranches. Bien entendu, compte tenu du déplacement linéaire des récipients par rapport aux projecteurs E1, E2,...Ei,...qui sont fixes, la direction tangente des faisceaux est considérée au moment de la prise de vue par les imageurs C1, C2,...Ci,...Cn. Tel que cela ressort plus précisément des figures 3D et 3E, une gamme de diamètres de tranches de récipients comporte un diamètre minimal dmin et un diamètre maximal dmax. Le cylindre CY possède un diamètre égal ou supérieur au diamètre minimal dmin et égal ou inférieur au diamètre maximal dmax. Aussi, pour inspecter une gamme de diamètres de tranches de récipients, la direction de faisceau DE1, DE2,...DEi,...DEn des projecteurs E1, E2,...Ei,...En est tangente au cylindre CY de diamètre inclus dans cette gamme de diamètres de tranches dmin-dmax. L'intervalle dmax - dmin est correctement couvert en prenant en compte la largeur des faisceaux. Si les faisceaux sont étroits, il convient d'augmenter le nombre de gammes et donc le nombre de projecteurs. Inversement, si les faisceaux sont trop larges, alors on augmente les risques d'interférences entre les prises d'images, et également on perd le choix des directions de faisceaux qui sont souhaitées précises. Selon une variante préférée, l'intervalle dmin - dmax est compris entre 10 et 30mm.

Comme indiqué ci-dessus, les gammes de diamètres des tranches de récipients sont différentes d'un ensemble à l'autre et sont fonction du diamètre de la tranche des récipients. Dans l'exemple de réalisation adapté pour inspecter quatre gammes différentes de diamètres de tranches de récipients, les projecteurs E1, E2,...Ei,...En forment quatre ensembles comportant chacun au moins six émetteurs lumineux directifs pilotables. Il doit être compris que les projecteurs de chaque ensemble sont adaptés pour éclairer une gamme déterminée de diamètres de tranches de récipients, différente d'un ensemble à l'autre.

De manière complémentaire, les projecteurs E1, E2,...Ei,...En de chaque ensemble sont fixés sur le support 14 de manière que les directions de faisceau DE1, DE2,...DEi,...DEn se trouvent réparties en azimut de sorte que lorsque lesdits projecteurs sont activés sélectivement pour des acquisitions d'image par les imageurs C1, C2,...Ci,...Cn, tous les points de la circonférence de la tranche i des récipients à inspecter sont éclairés par au moins un des projecteurs E1, E2,...Ei,...En. En d'autres termes, pour l'inspection de chaque récipient entrant dans une gamme déterminée de diamètres de tranches, les projecteurs E1, E2,...Ei,...En, faisant partie de l'ensemble inspectant cette gamme de diamètres, permettent d'éclairer la totalité de la périphérie de la tranche inspectée durant le défilement le long du chemin de circulation et l'acquisition des images par les au moins six imageurs.

Il ressort de la description qui précède que l'inspection de chaque récipient requiert l'activation successive de certains imageurs sélectionnés simultanément des émetteurs associés pendant des durées déterminées. Ces durées peuvent être telles que le récipient inspecté est considéré comme occupant une position fixe ou non dans la zone d'inspection Zi, lors de l'acquisition des images.

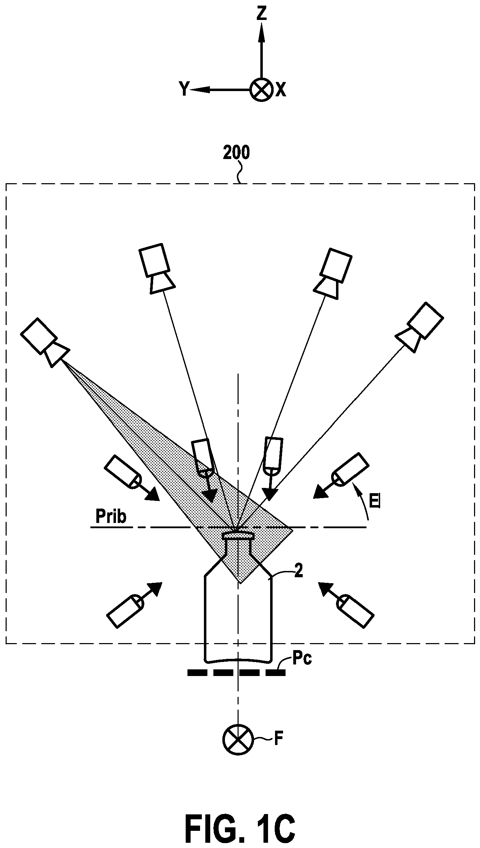

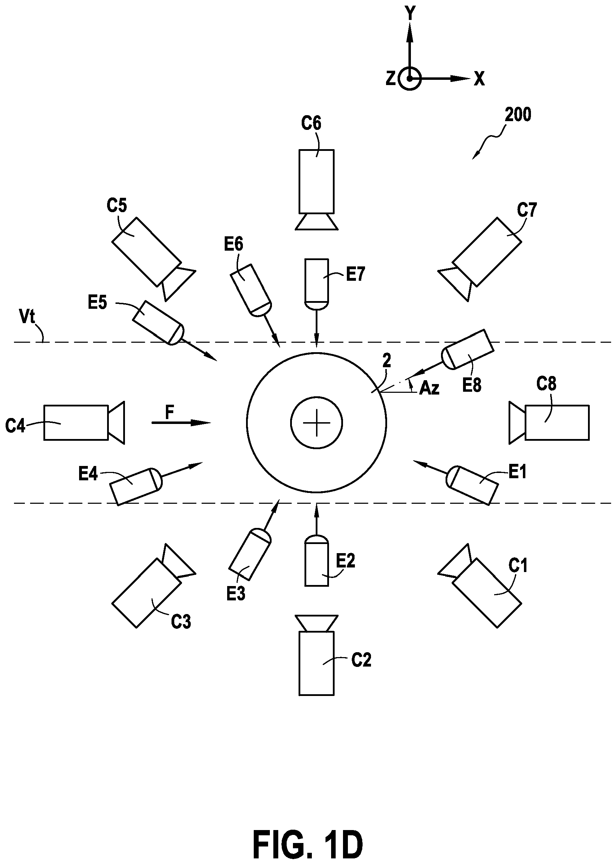

Pour la bonne détection des glaçures, il est nécessaire que les faisceaux d'éclairage des projecteurs atteignent la tranche du récipient à inspecter selon des directions d'incidences précises, des angles d'incidence précis, et également que l'observation par les imageurs se fasse sous des directions déterminées. La direction de faisceau des projecteurs est la direction que suit la lumière pour atteindre le récipient. La direction d'observation est la direction de l'axe optique de l'imageur, dirigé vers le récipient. Par convention les directions de faisceau (pour les projecteurs) et d'observation (pour les imageurs) sont définies comme suit par leur azimut, leur élévation et leur incidence radiale ou tangentielle, tangentielle horaire ou tangentielle antihoraire. L'azimut est l'angle de la projection de la direction du faisceau dans le plan X, Y, en prenant en référence en vue de dessus, la direction de déplacement F (ou l'axe X) et le sens trigonométrique, de 0° à 360°. L'ange d'azimut Az est représenté aux figures 1D et 3F. Par convention également, comme illustré aux figures 1A et 1C, l'élévation El des directions de faisceaux des projecteurs DE1, DE2,...DEi,...DEn ou des directions d'observation des imageurs C1, C2,...Ci,...Cn, (donc leurs axes optique AC1, AC2,...ACi,...ACn), est leur angle avec un plan orthogonal avec l'axe central A, par exemple avec le plan de référence d'inspection Prif, Prib, Prie. Cet angle se mesure donc dans un plan vertical donc parallèle à l'axe central A, contenant la direction de faisceaux ou de l'axe optique, ayant avec la direction F (ou l'axe X) l'angle d'azimut Az de la direction du faisceau ou de l'axe optique. L'angle d'élévation El mesuré dans le plan vertical, est pris dans le sens trigonométrique, positif de 0 à 90° lorsque le projecteur ou l'imageur est en plongée, et 0 à - 90° lorsqu'il est en contre-plongée par rapport au plan X, Y. Sur la figure 1C, le plan radial a un angle d'azimut de 90°, tandis que sur la figure 1A le plan radial a un angle d'azimut nul.

Au moins six imageurs ont leur direction d'observation donc leurs axes optique AC1, AC2,...ACi,...ACn pratiquement radiale de préférence, donc dirigée vers le centre de la zone d'inspection Zi. Au moment de l'acquisition d'une image, ils observent les récipients en visant pratiquement l'axe central A. Il est donc considéré que les directions d'observation c'est-à-dire les axes optiques AC1, AC2,...ACi,...ACn desdits imageurs sont radiaux. De tels imageurs, lorsque leur champ d'observation est suffisamment large, peuvent observer collectivement de manière complète la totalité de la tanche inspectée de plusieurs gammes de diamètres, durant le déplacement d'un récipient traversant la zone d'inspection Zi.

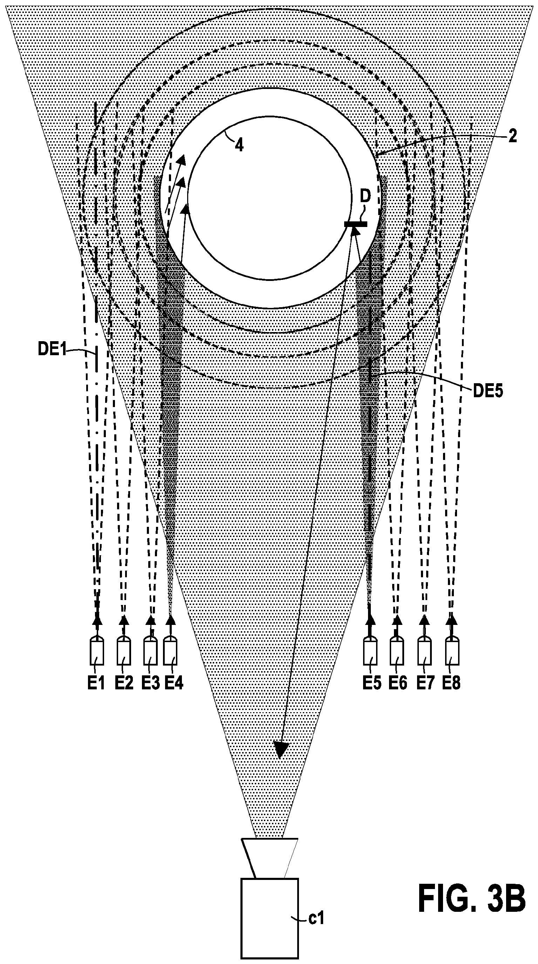

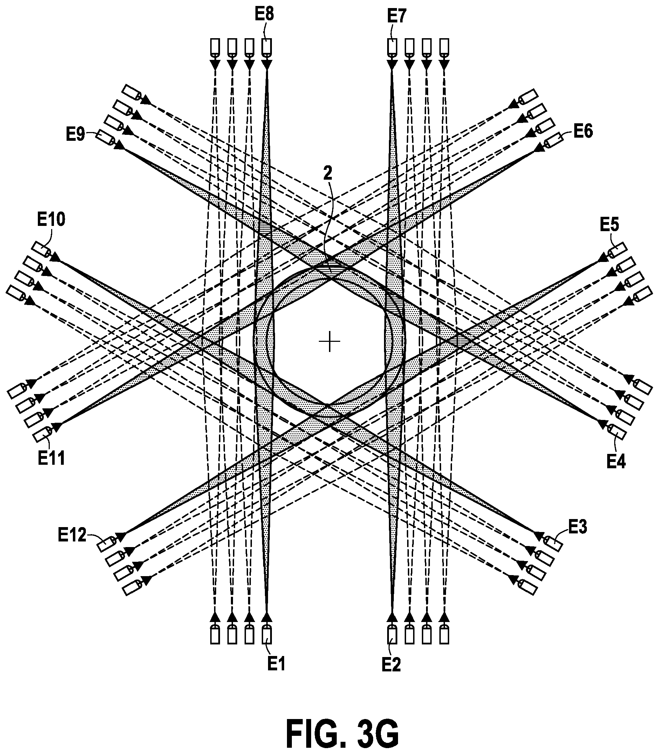

Le poste d'inspection comprend non seulement des projecteurs avec des angles d'azimuts et d'élévations différents comme il sera décrit plus loin, mais il convient également de distinguer les incidences des directions de faisceaux au niveau du point d'impact sur le récipient 2, au moment de l'activation des projecteurs. Le poste d'inspection comprend des projecteurs avec une incidence de direction de faisceau dite soit radiale, c'est-à-dire que le plan vertical qui contient la direction passe par l'axe central A, comme illustré figure 1D, soit tangentielle à un cylindre comme illustré figures 3B, 3F et 3G, qui sont des vues des faisceaux en projection dans le plan horizontal X, Y. Par exemple comme illustré à la figure 3F, les faisceaux E1 à E12 ont des azimuts différents, afin de pourvoir inspecter toute la périphérie de la tranche de récipients à inspecter qui serait cylindrique comme la bague. Ils sont d'incidences tangentielles au cylindre de la tranche de récipients à inspecter au moment de leur déclenchement. On voit que les projecteurs E2, E4, E6, E8, E10, E12 ont des directions de faisceau DE2, DE4, DE6, DE8, DE10, DE12 réparties en azimut, tangentielles à la bague, et avec une incidence horaire de la lumière et les projecteurs E1, E3, E5, E7, E9, E11 ont des directions de faisceau DE1, DE3, DE5, DE7, DE9, DE11 réparties en azimut, tangentielles à la bague, et avec une incidence antihoraire de la lumière. Par la suite, une incidence horaire ou antihoraire désignera implicitement une incidence tangente à un cylindre d'axe confondu avec l'axe central A. Il est à noter que pour prendre en considération le déplacement du récipient durant l'inspection, il peut être considéré un cylindre décalé selon la direction de translation F.

La figure 3B illustre, en vue de dessus (ou en projection dans le plan X, Y) que l'incidence tangentielle des faisceaux permet la détection de glaçure verticale (ou radiale). Dans cette vue schématique, la glaçure verticale D est représentée plan et presque radiale. La lumière incidente tangentiellement au cylindre de la tranche du récipient à inspecter est réfléchie en direction de l'objectif de l'imageur C1. On voit dans cette figure que les projecteurs E4 et E5 sont complémentaires, le projecteur E5 étant anti-horaire et le projecteur E4 horaire. On voit aussi que si la tranche du récipient à inspecter est dans une autre gamme de diamètres de tranches supérieurs, l'invention permet d'utiliser d'autres projecteurs (E6, E7, E8, E1, E2, E3) au lieu de déplacer les projecteurs E4 et E5.

De préférence, plusieurs projecteurs ont leurs champs d'éclairage qui se recoupent dans la zone d'inspection du poste d'inspection, donc sur la tranche du récipient à inspecter. Ainsi, que ce soit pour l'observation, la prise d'image ou l'éclairage, il est créé un recouvrement de la périphérie de la tranche du récipient à inspecter, sécurisé par le chevauchement des champs d'observation et des éclairements au cours des acquisitions de l'ensemble des images de la tranche du récipient à inspecter pour chaque récipient. Autrement dit, chaque élément de surface de la tranche de récipient à inspecter est représenté dans au moins une image, illuminé par le ou les projecteurs nécessaires à la mise en évidence de défauts dans ces images.

Selon l'exemple illustré à la figure 3G, le poste d'inspection comporte quatre ensembles comprenant chacun six projecteurs avec une incidence horaire et six projecteurs avec une incidence antihoraire. Chaque ensemble comporte ainsi douze projecteurs pour illuminer des tranches de récipients relevant d'une gamme de diamètres, la séquence d'allumage et les imageurs associés n'étant pas précisée. Dans l'exemple illustré à la figure 3G, les douze projecteurs E1 à E12 du premier ensemble sont illustrés comme activés pour illuminer les récipients présentant une gamme de petits diamètres de tranches. Les douze projecteurs de chaque autre ensemble seront activés pour illuminer des récipients relevant de gamme de diamètres de tranches supérieurs.

Selon une caractéristique avantageuse de réalisation, les projecteurs E1, E2,...Ei,...En, des différents ensembles sont disposés selon un arrangement comprenant côte à côte, un projecteur de chaque ensemble. Cet arrangement est répété pour répartir les projecteurs en azimut autour de l'axe central A des récipients. Chaque arrangement comporte par exemple un projecteur appartenant à chaque ensemble de projecteurs, un tel arrangement étant répété six fois sur la circonférence du support 14 lorsque les ensembles de projecteurs comporte chacun six projecteurs.

Selon un exemple de réalisation de l'invention, il est prévu pour la détection des glaçures verticales à la bague, des ensembles de dix projecteurs, avec trois élévations différentes, quatre gammes de diamètres et réalisant les incidences tangentielles horaires et antihoraires, soit 3 x 4 x 2 = 24 ensembles de dix projecteurs. Les dix arrangements comportent alors chacun huit projecteurs juxtaposés pour l'élévation -10°, en-dessous d'eux, huit projecteurs juxtaposés pour l'élévation -20° et enfin en-dessous, huit projecteurs juxtaposés pour l'élévation -30°. L'arrangement qui comporte au moins 24 projecteurs existe en dix exemplaires répartis en azimut. Etant donné que ces dix arrangements sont en-dessous du plan de référence de bague, ils laissent libre l'entrée et la sortie du chemin de circulation (figure 1A).

Selon une autre caractéristique avantageuse de réalisation, chaque ensemble de projecteurs E1, E2,...Ei,...En, comporte d'une part, des projecteurs avec des directions de faisceau réparties en azimut, tangentielles à une portion cylindrique de la paroi, par exemple à la bague, et avec une incidence horaire de la lumière sur la paroi, et d'autre part, des projecteurs avec des directions de faisceau, réparties en azimut, tangentielles à la portion cylindrique de la paroi, et avec une incidence antihoraire de la lumière sur la paroi. Par exemple, comme cela apparaît aux figures 3F et 3G, chaque ensemble comporte au moins six projecteurs E2, E4, E6, E8, E10, E12 avec des directions de faisceau réparties en azimut, tangentielles à la bague, et avec une incidence horaire de la lumière et au moins six projecteurs E1, E3, E5, E7, E9, E11 avec des directions de faisceau réparties en azimut, tangentielles à la bague, et avec une incidence antihoraire de la lumière. Il est à noter que les projecteurs E1, E2 possèdent un même angle d'azimut égal à 0° alors que les directions de faisceaux des projecteurs E1, E2 ont respectivement une incidence antihoraire et horaire. De même, les projecteurs E3, E4 possèdent un même angle d'azimut égal à 30° alors que les directions de faisceaux des projecteurs E3, E4 ont respectivement une incidence antihoraire et horaire. Ainsi, les directions de faisceaux des six projecteurs sont réparties régulièrement en azimut avec un décalage deux à deux de 30°.

Selon une variante de réalisation, chaque ensemble comporte dix projecteurs E1, E2,...Ei,...En avec des directions de faisceau présentant une incidence horaire et dix projecteurs E1, E2,...Ei,...En avec des directions de faisceau présentant une incidence antihoraire. Si un ensemble comporte dix projecteurs, alors les directions de faisceau des dix projecteurs sont réparties en angles d'azimut au sein de chaque ensemble de dix pour obtenir le recouvrement circulaire de la tranche du récipient à inspecter. A savoir, chaque portion de la circonférence qui au cours de la traversée de la zone d'inspection, sera imagée par au moins un imageur, sera illuminée selon les incidences voulues par au moins un projecteur de l'ensemble. Par exemple, pour une tranche de récipient à inspecter cylindrique, considérant un ensemble de 10 projecteurs ayant comme propriété commune l'incidence sur la surface de la région inspectée au moment de son illumination (azimut, élévation, tangentiel horaire ou antihoraire ou radial) chaque secteur angulaire de 1/10^{ème} (36°) du cylindre sera illuminé par un des 10 projecteurs avec ladite incidence, à la précision près liée au nombre (par exemple 10) limité de projecteurs de l'ensemble.

Selon une variante de réalisation, les projecteurs E1, E2,...Ei,...En sont répartis de manière symétrique de part et d'autre de la direction de translation F comme cela apparaît dans l'exemple illustré à la figure 1D.

II est rappelé que les projecteurs E1, E2,...Ei,...En sont situés en dehors du volume libre Vt. Aussi, les projecteurs qui sont positionnés à la même hauteur que le volume libre Vt ont une direction de faisceau ayant des angles d'azimut entre +5° et +175 ° et entre +185° et +355°. En revanche les projecteurs situés au-dessus ou au-dessous de volume libre Vt peuvent prendre tout angle d'azimut nécessaire, donnant par exemple une répartition uniforme quel que soit le nombre de projecteurs de chaque ensemble.

II ressort de la description qui précède qu'un point donné d'une tranche de récipient à inspecter situé dans la zone d'inspection Zi, se trouve en position d'être éclairé par plusieurs projecteurs E1, E2,...Ei,...En selon plusieurs directions de faisceaux, notamment différentes en élévation. Par chevauchement des zones éclairées par des faisceaux d'élévation et d'incidence identiques, pour des valeurs d'azimut différentes, proches, on peut créer également une redondance telle qu'un point donné d'une tranche à inspecter d'un récipient sera éclairée selon des directions de faisceaux différentes en azimut. Cela peut se réaliser si des faisceaux de même élévation et incidence, écartés en azimut de 10°, couvrent un secteur angulaire de 20° de la tranche de récipient (découpage autour de l'axe central A). De préférence, tous les points de la tranche à inspecter d'un récipient situé dans la zone d'inspection Zi se trouvent en position d'être éclairés au moins une fois durant leur traversée de la zone d'inspection Zi sur le chemin de circulation, et durant l'acquisition de séries d'images par les imageurs, par plusieurs projecteurs selon plusieurs directions de faisceau.

Bien entendu, les directions de faisceau des projecteurs E1, E2,...Ei,...En sont réparties aussi en élévation de manière déterminée. Avantageusement, chaque ensemble de projecteurs E1, E2,...Ei,...En comporte plusieurs sous-ensembles de projecteurs avec chacun un angle d'élévation de valeur absolue différente d'au moins 5°. En d'autres termes, pour chaque ensemble, il existe au moins deux projecteurs avec des angles d'élévation différents c'est-à-dire présentant entre eux, un écart d'au moins 5°.

Selon une caractéristique avantageuse de réalisation, les projecteurs des ensembles possèdent une direction de faisceau avec des angles d'élévation de valeur absolue prise entre 0° et 45°.

Selon l'exemple de réalisation cité ci-dessus, il est prévu de choisir pour chaque ensemble, trois angles d'élévation pour les projecteurs, à savoir -10°, -20°, -30°. Selon cet exemple, pour chaque valeur de l'angle d'élévation, chaque ensemble comporte dix projecteurs E1, E2,...Ei,...En avec des directions de faisceau présentant une incidence tangentielle horaire et dix projecteurs E1, E2,...Ei,...En avec des directions de faisceau présentant une incidence tangentielle antihoraire. Le poste d'inspection comporte ainsi pour chaque ensemble, soixante projecteurs avec vingt projecteurs distribués en azimut pour chacune des trois valeurs d'angles d'élévation. Comme le poste d'inspection comporte quatre ensembles pour inspecter quatre gammes de diamètres, le poste comporte dans cet exemple, deux cent quarante projecteurs. Un tel poste d'inspection avec des projecteurs d'incidence tangentielle concerne la détection des glaçures verticales et/ou radiales. Ce poste d'inspection peut bien entendu comporter, de préférence, des ensembles de projecteurs et des imageurs supplémentaires pour la détection des glaçures horizontales sur les parties cylindriques ou périphériques sur un fond plat, ou d'autres défauts.

Bien entendu, les projecteurs E1, E2,...Ei,...En éclairant les récipients 2 sont associés à des imageurs C1, C2,...Ci,...Cn, pour détecter les réflexions spéculaires provenant des glaçures.

Chaque poste de détection I1, I2,... comporte pour chaque gamme de diamètre de tranches de récipients à inspecter, au moins six imageurs C1, C2,...Ci,...Cn, formant des images et possédant un axe optique AC1, AC2,...ACi,...ACn dirigé vers l'intérieur de la zone d'inspection Zi. Ces imageurs C1, C2,...Ci,...Cn sont montés sur le support 14 de manière que leurs axes optiques AC1, AC2,...ACi,...ACn se trouvent répartis autour de l'axe central A des récipients en choisissant leurs angles d'azimut entre 0 et 360° par rapport à la direction de translation, de sorte que tous les points de la circonférence de la tranche inspectée soient représentés dans au moins une image acquise durant la traversée de la zone d'inspection par la tranche de récipient. Bien entendu, le nombre d'imageurs C1, C2,...Ci,...Cn, avec les axes optiques répartis en azimut peut être supérieur à six. Selon un exemple de réalisation, douze imageurs avec leurs axes optiques AC1, AC2,...ACi,...ACn, répartis en azimut peuvent être utilisés pour prendre des images sur toute la circonférence de la tranche inspectée. De manière avantageuse, les imageurs C1, C2,...Ci,...Cn, sont répartis de manière à obtenir un chevauchement des images prises par les différents imageurs. Ce chevauchement garanti que tout point de la tranche de récipient à inspecter est représenté dans au moins une image obtenue dans les conditions d'observation et d'éclairage nécessaire à la détection d'un type de défaut, par exemple de type glaçure verticale.

Par ailleurs, les imageurs C1, C2,...Ci,...Cn, possèdent des axes optiques AC1, AC2,...ACi,...ACn dont les angles d'élévation sont de valeur absolue prise entre 10° et 90°. Avantageusement, au moins deux imageurs possèdent des axes optiques AC1, AC2,...ACi,...ACn avec des angles d'élévation de valeurs différentes. Selon un exemple de réalisation, les axes optiques AC1, AC2,...ACi,...ACn des imageurs possèdent six valeurs d'angles d'élévation différentes comme 10°, 20°, 30°, 40°, 50° et 60°. Selon un tel exemple de réalisation, le poste d'inspection comporte ainsi soixante-douze imageurs AC1, AC2,...ACi,...ACn avec douze imageurs distribués en azimut pour chacune des six valeurs d'angles d'élévation.

Pour la détection des glaçures verticales ou radiales, les angles d'élévation des axes optiques AC1, AC2,...ACi,...ACn des imageurs sont d'un signe opposé aux angles d'élévation des directions de faisceau DE1, DE2,...DEi,...DEn des projecteurs pilotables associés. En d'autres termes, les imageurs C1, C2,...Ci,...Cn, sont disposés d'un côté du plan de référence d'inspection tandis que les projecteurs E1, E2,...Ei,...En sont disposés de l'autre côté du plan de référence d'inspection. Il est à noter que les valeurs absolues des angles d'élévation des axes optiques des imageurs C1, C2,...Ci,...Cn, sont identiques ou différentes des valeurs absolues des angles d'élévation des directions de faisceau des projecteurs associés.

Il doit être compris qu'un ou plusieurs imageurs C1, C2,...Ci,...Cn, sont destinés à prendre des images lors de l'éclairage par les projecteurs associés E1, E2,...Ei,...En. Ainsi, le système électronique III est adapté pour activer un ou plusieurs imageurs C1, C2,...Ci,...Cn, de manière synchrone avec des projecteurs associés E1, E2,...Ei,...En. Cette activation simultanée permet la prise d'au moins une image alors qu'une partie de la tranche inspectée est éclairée. Une telle séquence d'allumage et d'enregistrement des images peut être répétée suivant différents ordres qui dépendent de la disposition fixe des projecteurs et des imageurs, et du diamètre des récipients. Par exemple, la séquence se répète selon une direction circonférentielle du récipient et/ou éventuellement suivant une direction circonférentielle contraire. Il est ainsi possible d'éclairer le récipient successivement en prenant simultanément des images. Lors de la translation des récipients 2 dans la zone d'inspection Zi, il est ainsi possible d'acquérir pour chaque récipient, une série d'images par exemple entre son entrée et sa sortie de la zone d'inspection Zi.

Le système électronique III enregistre toutes les images et les analyse pour détecter des défauts de glaçures. Chaque imageur délivre plusieurs images en coopérant avec des projecteurs, différents pour chaque image. D'une manière générale, un imageur reçoit un signal de déclenchement (ou trigger), en réponse auquel l'imageur va réaliser les étapes suivantes, dont l'ensemble constitue l'acquisition d'image: début d'exposition, fin d'exposition, lecture et transfert d'au moins une région de l'image.

Selon une variante avantageuse de l'invention, chaque imageur délivre plusieurs images de plusieurs types en coopérant avec des projecteurs différents pour chaque image, dans le but de détecter des défauts de différents types, qui diffèrent par leur nature, leur forme et/ou leur localisation dans le récipient. Par exemple, un imageur peut acquérir successivement :
- des images d'un premier type pour détecter des glaçures verticales situées au bord intérieur de la surface de bague, en coopérant avec des projecteurs d'un premier ensemble produisant des incidences tangentielles horaires ;
- des images d'un deuxième type pour détecter des glaçures verticales situées au bord intérieur de la surface de bague, en coopérant avec des projecteurs d'un deuxième ensemble produisant des incidences tangentielles antihoraires ;
- des images d'un troisième type pour détecter des glaçures horizontale situées dans les filets d'une bague à vis, en coopérant avec des projecteurs d'un troisième ensemble produisant des incidences radiales dirigées en direction des filets par l'intérieur du goulot ;
- des images d'un quatrième type pour détecter des glaçures horizontales situées sous la contre bague, en coopérant avec des projecteurs d'un quatrième ensemble produisant des incidences radiales en direction de la contre bague par l'intérieur du goulot ;
- des images d'autres types pour détecter des défauts d'autres types en coopérant avec des projecteurs, directifs ou non directifs, appartenant à d'autres ensembles produisant des éclairements dédiés en direction d'une partie de la région à inspecter.

Les paramètres d'acquisition des imageurs Ci comprennent notamment les paramètres de fonctionnement des caméras industrielles, à savoir :
- un délai ou retard entre le signal de déclenchement (nommé trigger) et le début d'intégration et/ou,
- une information inhibant l'acquisition et/ou,
- un temps d'intégration TI, qui est la durée durant laquelle les photons sont convertis en signal électrique par chaque pixel d'un capteur matriciel et/ou
- un gain d'amplification G analogique et/ou numérique qui modifie le niveau de signal produit par les pixels et/ou,
- un choix de lois d'amplification ou de conversion analogique et/ou numérique G qui peuvent être linéaires ou non linéaires, par exemple logarithmique et/ou,
- les coordonnées (x, y, x' , y') d'une ou plusieurs zones d'intérêt, dites ROI (REGION OF INTEREST) ROI1, ROI2,.., qui sont des régions du capteur dont les pixels seront effectivement transmis à l'unité de traitement.

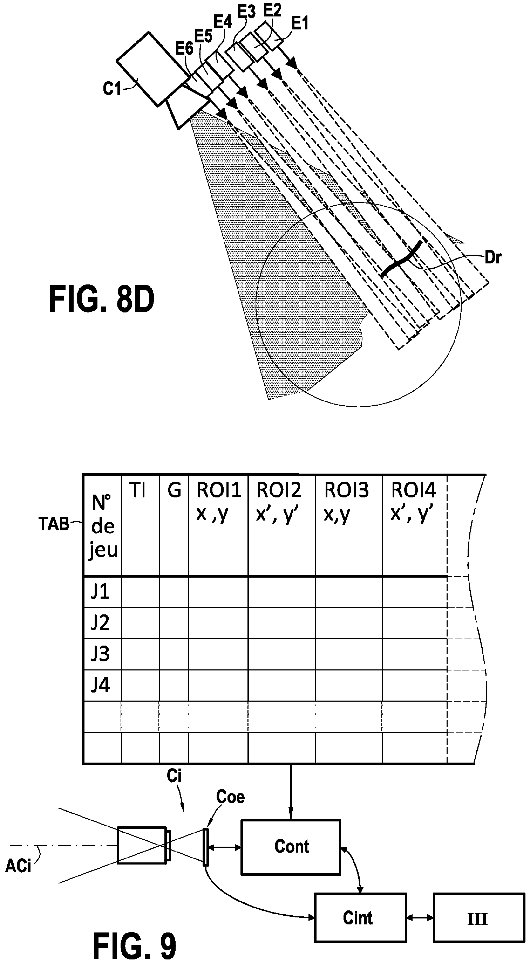

L'ensemble de ces paramètres constitue ce qu'on appellera dans cette description, un jeu de paramètres d'acquisition pouvant être rassemblés dans une table TAB de jeux J1, J2, J3...de paramètres d'acquisition, comme illustré à la figure 9. Selon cet aspect de l'invention, les différentes acquisitions d'images par un imageur pour chaque récipient peuvent être réalisées avec des jeux de paramètres d'acquisition différents. Ceci permet par exemple d'adapter le gain G en fonction du type d'éclairage produit ou la teinte du récipient, ou bien de sélectionner et transmettre des images de dimensions minimales, limitées au champ dans lequel la mise en évidence des défauts est obtenue sans transmettre des portions d'images pourvues d'informations inutiles.

Selon une variante avantageuse de l'invention, les acquisitions d'image par un imageur pour chaque récipient peuvent être réalisées en lisant à chaque fois une région d'intérêt ROI1, ROI2,...différente. Ladite région d'intérêt est dépendante du type de défaut recherché, de la position prévue de la tranche du récipient à inspecter dans le champ de la caméra au moment de l'acquisition, de la dimension et forme des récipients, notamment du diamètre du goulot ou du corps selon quelle tranche est inspectée.

Un imageur selon l'invention comporte au moins un capteur optoélectronique Coe comportant de préférence une matricielle de pixels (cellules photosensibles). Il est de type CCD ou CMOS ou toute technologie optoélectronique apte à produire une image électronique. Un imageur comporte également une électronique de pilotage Cont, qui permet de modifier les paramètres d'acquisition et de communiquer, via un interface Cint avec un système électronique distant tel que le système électronique III. L'électronique de pilotage Cont, peut déterminer les horloges de pixels, de lignes, de trame, définir les zones de ROI qui seront transmises, déterminer le temps d'intégration etc... L'électronique de pilotage est constituée d'un ensemble de circuits de tout type, pouvant être intégrés totalement ou partiellement au capteur optoélectronique Coe, ou bien distribués au sein de l'imageur dans des composants programmables de type FPGA CPLD, des microcontrôleurs et des mémoires. L'électronique de pilotage est également reliée à tout système distant, en l'occurrence au système électronique III, pour en recevoir des commandes de réglage, tels qu'au moins un jeu de paramètres d'acquisition et des commandes d'action comme un signal de déclenchement. Un tel signal de déclenchement est donc un signal reçu qui déclenche l'intégration du capteur, puis la lecture du capteur, éventuellement un traitement des signaux (par exemple amplification, filtrage, conversion analogique numérique, désentrelacement, conversion des couleurs, etc.) des signaux et leur transmission sous forme d'une image, par exemple numérique. Il est possible que cette communication soit bidirectionnelle afin que l'électronique de pilotage puisse donner au système distant relié, des informations sur l'état de fonctionnement de l'imageur. L'électronique de pilotage sert également à délivrer au système distant, les images, c'est-à-dire les vidéos en format analogique, ou bien de préférence les images en formats numériques. Pour cela, l'électronique de pilotage est interfacée avec le système distant moyennant une ou plusieurs connexions généralement filaires mais possiblement hertziennes. Par exemple, les connexions filaires correspondent à tout standards de communication connu en soi, qui permettent la transmission des images, tels que « IEEE1394 », « CameraLink », « USB 2.0 » « USB 3.0 », « GiGE » ou « CoaXPress ».

Ainsi, les imageurs Ci sont reliés au système électronique III via une liaison de tout type connu, pour recevoir un signal de déclenchement, et au moins un jeu de paramètres d'acquisition. Dans la réalisation décrite la liaison est filaire.

Chaque imageur est identifié par un identifiant, autrement dit une adresse, de manière à ce qu'un système distant tel que le système électronique III relié à plusieurs imageurs puisse piloter différemment chaque imageur, c'est-à-dire les commander ou déclencher individuellement, de manière synchrone ou asynchrone, et avec un jeu de paramètres d'acquisition différent pour chaque imageur. Selon l'invention, les au moins six imageurs sont reliés au système électronique III et peuvent être déclenchés à la demande et avec des paramètres d'acquisitions différents à chaque fois.

Une solution pour déclencher les imageurs et réaliser des acquisitions successives de chaque imageur avec un jeu de paramètres d'acquisition différents, consiste en ce que le système électronique III programme un nouveau jeu de paramètres d'acquisition pour chaque imageur avant le déclenchement de chaque imageur.

Selon une variante avantageuse de l'invention, l'électronique de pilotage Cont de chaque imageur contient une mémoire apte à enregistrer une liste ou une table TAB de plusieurs jeux de paramètres d'acquisition successifs, et un séquenceur tel qu'à chaque déclenchement le jeu de paramètres suivant de la liste est préparé pour déterminer les paramètres d'acquisition de la prochaine acquisition d'image. Selon l'invention, le système électronique III dans une phase de démarrage ou réglage du poste d'inspection, programme ou enregistre pour chaque imageur un nombre égal de jeux paramètres d'acquisition successifs. Ensuite, pour chaque récipient, en fonction du déplacement du récipient dans la zone d'inspection, le système électronique III déclenche les acquisitions en envoyant un signal de déclenchement à chaque imageur. Il peut également être envisagé l'envoi d'un signal de déclenchement commun unique à tous les imageurs de l'installation pour chaque déplacement incrémental du récipient. Dans ce cas, le délai peut être différent pour plusieurs imageurs afin qu'ils déclenchent leur exposition à des moments différents. Il peut également être prévu dans les listes de jeu de paramètres d'acquisition, des jeux de paramètres indiquant de ne pas acquérir d'image sur un des signaux de déclenchement reçus en séquence.

Selon la variante avantageuse de l'invention, chaque projecteur Ei est activé plusieurs fois en coopérant soit avec un imageur associé déclenché lui-même plusieurs fois, soit avec des imageurs différents déclenchés séparément dans le temps, pour produire différents types d'images, dans le but de détecter des défauts de différents types, qui diffèrent par leur nature, leur forme et/ou leur localisation dans le récipient. Par exemple, un projecteur peut être activé successivement pour :
- produire des images d'un premier type pour détecter des glaçures horizontales situées dans les filets d'une bague à vis, en coopérant avec un imageur observant la bague sous un 1^{er} angle d'élévation ;
- produire des images d'un deuxième type pour détecter des glaçures horizontales situées dans les filets d'une bague à vis, en coopérant avec un imageur observant la bague sous un deuxième angle d'élévation.

Les paramètres d'illumination des projecteurs Ei comprennent par exemple :
- un délai ou retard entre le signal de déclenchement (nommé trigger) et le début d'illumination et/ou,
- un temps d'illumination, qui est la durée durant laquelle la lumière est émise et/ou,
- l'activation ou la non activation du projecteur en réponse à un signal de déclenchement et/ou,
- une intensité de lumière émise dans le cas d'un projecteur monochrome,
- plusieurs valeurs d'intensité de lumière émises dans le cas d'un projecteur polychrome par combinaison de sources élémentaires de couleurs différentes.

L'ensemble des paramètres d'illumination constitue en ce qu'on appellera dans cette description, un jeu de paramètres d'illumination d'un projecteur pouvant être rassemblés dans une table TAB' de jeux J1', J2', J3'...de paramètres d'acquisition, comme illustré à la figure 10. Selon l'invention, les illuminations successives ou distantes dans le temps d'un projecteur pour chaque récipient peuvent être réalisées avec des jeux de paramètres d'illumination différents. Ceci permet par exemple d'allumer certains projecteurs et pas d'autres lors de toute acquisitions d'image par un imageur ; ou bien encore d'adapter l'énergie lumineuse incidente en fonction des régions illuminées ou inspectées ; ou encore, des groupes de projecteurs peuvent éclairer une même zone en nombre différent selon le type d'image à produire et/ou l'imageur associé.

Selon l'invention, chaque projecteur Ei contient au moins une source de lumière telle une LED, un circuit électronique de puissance et pilotage Cpp. Ce circuit électronique de puissance et pilotage Cpp contrôle le stockage, la charge et la décharge de l'énergie électrique dans la ou les LED. Par exemple le stockage de charge électrique est une capacité. Chaque projecteur est relié à une alimentation électrique et au système électronique III par une liaison, par exemple filaire, via un circuit interface Cint'. Un réseau est organisé pour relier tous les projecteurs au système électronique III. La liaison fonctionne selon un protocole de communication de type bus, permettant au système électronique III d'adresser séparément chaque projecteur ou chaque ensemble de projecteurs pour lui fournir au moins un jeu de paramètres d'illumination et un signal de déclenchement. On rappelle que dans un ensemble de projecteurs, les projecteurs ont les mêmes directions de faisceau relativement à la tranche de récipients à inspecter au moment de leur activation, donc la même fonction de détection.

Selon une variante avantageuse de l'invention, l'électronique de pilotage de chaque projecteur ou ensemble contient une mémoire apte à enregistrer une liste ou une table de plusieurs jeux de paramètres d'illumination successifs, et un séquenceur tel qu'à chaque signal de déclenchement, le jeu de paramètres d'illumination appliqué correspond au jeu suivant de la liste.

Selon l'invention, le système électronique III dans une phase de démarrage ou réglage du poste d'inspection, programme ou enregistre pour chaque projecteur, un nombre égal de jeux paramètres d'illumination, successifs. Ensuite, pour chaque récipient, en fonction du déplacement du récipient dans la zone d'inspection, le système électronique III déclenche les acquisitions d'image et les illuminations en envoyant un signal de déclenchement à chaque imageur et chaque projecteur. Il peut également être envisagé l'envoi d'un signal de déclenchement commun unique à tous les projecteurs du poste d'inspection pour chaque déplacement incrémental du récipient. Il est prévu dans les listes de jeu de paramètres d'illumination, des jeux de paramètres indiquant de ne pas illuminer le projecteur sur un signal de déclenchement. Ainsi, les projecteurs ne sont éclairés que pour contribuer à des conditions spécifiques d'illumination d'une région de l'article pour une observation par un imageur donné dans le but de détecter des défauts donnés.

Cette solution offre plusieurs avantages.

En premier lieu, s'il y a un grand nombre d'imageurs et un grand nombre de projecteurs, et de nombreuses acquisitions d'images à faire avec des jeux de paramètre d'acquisition et d'illumination différents à chaque fois, il devient très long, compliqué et risqué de programmer l'ensemble des imageurs et des projecteurs avant chaque acquisition.

Par exemple selon une variante de l'invention, le nombre d'imageurs est supérieur à 20 et le nombre de projecteurs supérieur à 100, la fréquence d'acquisition de l'ordre de 1000 images par seconde. Il s'avère plus simple de préprogrammer les imageurs et les projecteurs dans une phase de réglage et les déclencher ensuite simplement en fonction du déplacement du récipient dans la zone d'inspection.

Selon une autre variante de l'invention, chaque projecteur est composé d'une source de lumière individuelle pouvant être pilotée et munie d'une optique de de focalisation Opf.

Bien entendu, pour initialiser l'inspection de chaque récipient, il est avantageux de déterminer la position de chaque récipient à l'aide par exemple d'un imageur. De préférence, des capteurs comme des cellules (barrière lumineuse) détectent le moment de passage d'un récipient à un endroit précis et un capteur comme un codeur incrémental informe le système électronique III des déplacements du convoyeur, ce qui permet selon une méthode bien connue, de localiser à tout moment la position d'un récipient le long du chemin de circulation.

Le système électronique III illustré de manière symbolique sur les dessins, peut être réalisé sous la forme d'au moins un ordinateur standard, comportant donc au moins un microprocesseur, une ou plusieurs unités de mémoire électronique et une ou plusieurs interfaces d'affichage (écran, projecteur, affichage holographique, ...), de saisie (clavier, souris, pavé tactile, écran tactile, ...), et / ou de communication (USB, Ethernet^{®}, Wi-Fi^{®}, Bluetooth^{®}, Zigbee^{®}, ...). Le système électronique III peut comprendre un réseau informatique partageant des données avec un ou plusieurs autres ordinateurs du réseau, ou avec d'autres réseaux, par exemple par un protocole internet ou Ethernet^{®}. En plus de son évidente liaison, le système informatique III peut être relié à des capteurs donnant des informations d'état de l'installation, et / ou à des actionneurs de l'installation (convoyeurs, éjecteurs, cellules codeurs, ...). Le système informatique III peut avantageusement être relié aux projecteurs et aux imageurs pour en acquérir des données de fonctionnement, et / ou pour en assurer le contrôle. Le système informatique III met en oeuvre un ou plusieurs logiciels, stockés(s) et / ou exécuté(s) en local ou à distance, y compris sur un ou plusieurs serveurs informatiques distants. Ce ou ces logiciel(s) comprennent de préférence un ou plusieurs logiciel(s) programmés pour mettre en oeuvre la méthode selon l'invention.

Dans le cadre du poste d'inspection conforme à l'invention, le système électronique III est configuré pour inspecter les récipients relevant de la totalité des gammes de diamètres. Lors de l'inspection des récipients dont le diamètre de la tranche inspectée est inclus dans la gamme de diamètres d'un ensemble, le système électronique assure l'acquisition d'au moins six images de chaque récipient en activant sélectivement les au moins six imageurs simultanément avec les projecteurs associés dudit ensemble.

Le système électronique III est configuré pour réaliser chaque acquisition d'image pour la détection de glaçures verticales à la bague sous éclairage horaire, de la manière suivante. Il détermine à tout moment par une méthode connue de suivi, la position précise d'un récipient en défilement dans la zone. Connaissant le diamètre de la tranche de récipient à inspecter, il détermine l'instant où la tranche de récipient à inspecter ou un secteur angulaire de la tranche de récipient à inspecter se trouve à la fois dans le champ d'un imageur et illuminé sous l'incidence voulue d'au moins un projecteur. Il déclenche donc ledit imageur et ledit projecteur sélectionné. Ce projecteur appartient donc à l'ensemble des projecteurs tangents au cylindre correspondant à la gamme de diamètre de la tranche de récipient à inspecter. Plusieurs projecteurs positionnés pour la même gamme de diamètres de tranches de récipients, par exemple avec des élévations différentes, peuvent être activés durant cette acquisition d'image. Ce fonctionnement se généralise donc à l'ensemble de la tranche de récipient à inspecter, aux images pour la détection de glaçures verticales sous éclairage antihoraire et également aux images pour la détection de glaçures horizontales sous éclairage centré.

Le système électronique III est configuré également pour éviter les interférences. Selon un mode préféré de réalisation, tous les imageurs sont indépendants, et constitués chacun d'un capteur et d'un objectif. Les interférences correspondent à la situation où la lumière émise par un projecteur pour illuminer une partie de la tranche de récipient à inspecter pour qu'un type de défaut donné soit vu par un imageur donné, crée une lumière parasite en l'absence de défaut dans la tranche de récipient, le parasite étant vu comme un défaut par un autre imageur. Les couples projecteur/imageur sont commandés séquentiellement afin d'éviter cet effet. Il est à noter que les temps d'intégration des imageurs étant très courts, entre 50µs et 1ms, cela autorise un grand nombre d'acquisitions séparées temporellement dans un intervalle de temps court correspondant à la traversée de la zone d'inspection Zi par les récipients. Dans un exemple de réalisation, le procédé pour détecter des défauts de type glaçures horizontales et verticales à la bague, consiste à acquérir et analyser au moyen de 32 à 96 imageurs, 300 à 1200 projecteurs, d'un système électronique III, 500 à 2000 images de chaque récipient.

Pour la détection des glaçures horizontales, un poste de détection I1, I2,...comporte plusieurs groupements d'au moins six projecteurs E1, E2,...Ei,...En, désignés dans la suite de la description par groupements BH. Ces groupements BH sont montés par une liaison complète 13 sur le support 14 en étant situés en dehors du volume libre V1, comme décrit précédemment. Selon une variante, les projecteurs E1, E2,...Ei,...En d'un groupement BH illuminent une tranche inspectée inclus dans une gamme de diamètres, cette gamme étant différente d'un groupement à l'autre. Sinon, selon une autre variante, les groupements BH sont adaptés à l'ensemble des gammes de diamètres des tranches de récipients. Les projecteurs d'un groupement BH sont activés successivement pour des acquisitions d'image par des imageurs associés C1, C2,...Ci,...Cn, de manière que tous les points de la circonférence de la tranche inspectée des récipients sont éclairés par au moins un des projecteurs dans l'ensemble des images produites pour la détection des glaçures horizontales. Les projecteurs E1, E2,...Ei,...En, d'un groupement BH possèdent une direction de faisceau DE1, DE2,...DEi,...DEn selon une élévation de même signe que l'élévation de l'axe optique AC1, AC2,...ACi,...ACn des imageurs associés C1, C2,...Ci,...Cn. Leurs directions de faisceau ne sont pas tangentes à des cylindres mais dirigées vers l'axe normal A des récipients au moment de leur activation par le système électronique III.

La description qui suit décrit la variante de réalisation du poste d'inspection I2 illustré à droite de la figue 1A, pour illustrer comment l'invention est mise en oeuvre pour inspecter des glaçures radiales ou circulaires au fond.

Selon une configuration préférée du poste I2, les imageurs pour le contrôle des glaçures au fond sont situées en-dessous du plan de référence.

Les glaçures radiales au fond des récipients, donc orientées plutôt de manière radiale, sont détectées de la même manière que les glaçures verticales pour la bague des récipients, autrement dit, pour ces glaçures radiales (figures 9A et 9B), on utilise des ensembles de projecteurs E1, E2,...Ei,...En, disposés sur le support 14 pour être aptes au moment de leur activation, à éclairer la portion inspectée correspond au fond selon des directions de faisceau DE1, DE2,...DEi,...DEn tangentes à un ou plusieurs cylindres CY, de manière à inspecter des récipients dont les fonds ont un diamètre compris dans une gamme de diamètres particuliers. Le fond n'étant pas un anneau mais un disque, les projecteurs tangentiels doivent illuminer tout le disque depuis son centre jusqu'au bord, comme indiqué à la figures 9C. Bien entendu, on utilise des ensembles avec des incidences horaires et d'autres antihoraires. Ainsi il est prévu au moins autant d'ensembles de projecteurs pour la détection de glaçures au fond qu'à la bague. On peut donc résumer ainsi que les glaçures radiales au fond, sont détectées en activant des ensembles de projecteurs dont les directions de faisceaux sont tangentes à des cercles dépendant de la gamme à laquelle appartient le diamètre de la tranche de récipient à inspecter, incluant des ensembles d'incidence horaire ou antihoraire. Ces ensembles sont disposés à l'opposé des imageurs associés par rapport au plan de référence et peuvent présenter, de préférence, plusieurs sous-ensembles dont la direction de faisceau présente plusieurs valeurs d'élévation différentes, plusieurs projecteurs étant activés si besoin pour un même imageur associé.

Pour la détection des glaçures au fond des récipients, l'on peut considérer également que les glaçures circulaires, donc orientées plutôt de manière circulaire, sont détectées de la même manière que les glaçures dites horizontales pour la bague des récipients. Pour ces glaçures circulaires (figure 8B) on utilisera des ensembles de projecteurs E1, E2,...Ei,...En, disposés sur le support 14 pour être aptes au moment de leur activation, à éclairer la tranche de récipient à inspecter correspondant au fond, selon des directions de faisceau DE1, DE2,...DEi,...DEn orientées en direction du centre du fond CF, coïncidant avec l'axe central A, mais pour atteindre des cercles concentriques de différents rayons, de manière à inspecter des récipients dont les fonds ont un diamètre compris dans une gamme de diamètres particuliers. Ces ensembles de projecteurs doivent illuminer le fond depuis le centre jusqu'au bord, comme indiqué à la figure 8D.

Certains projecteurs sont situés du même côté du plan de référence Prf fond que les imageurs utilisés.

Bien entendu, le fond des récipients n'est pas strictement plat et peut même comporter une piqûre. La méthode et le dispositif sont adaptés à des fonds avec piqûre.

Le procédé selon l'invention pour détecter des défauts de type glaçures dans une tranche de récipients au moyen d'un poste conforme à l'invention consiste :
- pour chaque type de détection de glaçure, à savoir la détection de glaçures radiales ou verticales sous incidence horaire, et/ou la détection de glaçures radiale ou verticales sous incidence antihoraire ;
- et pour chacun d'au moins six secteurs angulaires de la tranche de récipient à inspecter ;
- et pour une gamme déterminée de diamètre de la tranche de récipient à inspecter ;
- à déterminer à l'avance, en fonction d'une mesure du déplacement des récipients dans la zone d'inspection, l'instant où le secteur angulaire de la tranche à inspecter de chaque récipient 2 sera observé dans la zone d'inspection Zi sous un angle d'observation Az, El donné par un imageur sélectionné et illuminé sous un ou plusieurs angles Az, EL et incidences (radial ou tangentiel horaire ou tangentiel antihoraire) donnés par au moins un projecteur sélectionné parmi l'ensemble correspondant à la gamme de diamètre de la tranche [dmin dmax] incluant celui de la tranche de récipient à inspecter ;
- et à déclencher à l'instant déterminé, l'imageur sélectionné et le ou les projecteurs sélectionnés de manière à ce que chaque secteur angulaire de la tranche de récipient à inspecter soit inspecté de manière complète pour détecter chaque type de glaçure.

Le procédé comprend donc autant d'acquisitions d'images durant le parcours, que de secteurs angulaires de la tranche inspectés et de types de défauts. Le nombre de secteurs angulaires de la tranche inspectée est inférieur ou égal au nombre d'imageurs dont la direction d'observation ou axe optique AC1 ...ACn a la même élévation. Le nombre de projecteurs de chaque ensemble est supérieur ou égal au nombre de secteurs angulaires. Le nombre total d'ensembles de projecteurs correspond au nombre de directions de faisceaux nécessaires.

Beaucoup d'images seront donc analysées pour rechercher les défauts. Par exemple entre 500 à 2 000 images pour chaque récipient.

L'analyse d'image consiste notamment à détecter les reflets blancs sur fond noir correspondant à la lumière réfléchie par les glaçures. Il consiste également à discriminer les tâches associées à des défauts, par rapport à d'éventuels reflets parasites.

## Revendications

1. Poste pour détecter des défauts de type glaçures dans une tranche de récipients (2) possédant un axe central (A) et défilant selon une direction de translation, sans rotation autour de leur axe central, le poste comportant :
- un support (14) disposé le long d'un chemin dans lequel circule au moins une tranche des récipients s'étendant au-dessous d'un plan de référence d'inspection de la bague (Prib) ou au-dessus d'un plan de référence d'inspection du fond (Prit), ce chemin de circulation (Vt) comprenant successivement, une entrée, une zone d'inspection et une sortie pour les récipients ;
- au moins six imageurs (C1, C2,...Ci,..Cn) formant des images et possédant un axe optique dirigé vers l'intérieur de la zone d'inspection en étant montés sur le support de manière que leurs axes optiques sont répartis autour de l'axe central (A) des récipients en choisissant leurs angles d'azimut entre 0 et 360° par rapport à la direction de translation, de sorte que tous les points de la circonférence de la tranche des récipients soient représentés dans au moins une image acquise durant la traversée de la zone d'inspection par la tranche de récipient ;
- au moins douze projecteurs (E1, E2,...Ei,...En) formant plusieurs ensembles comportant chacun au moins six projecteurs montés sur le support, possédant chacun une direction de faisceau et positionnés sur le support de manière que :
(a) les directions de faisceau (DE1, DE2,...DEi,...DEn) sont tangentes à un cylindre centré sur l'axe central (A) du récipient, le diamètre du cylindre étant inclus dans une gamme de diamètres de tranches de récipients ;
(b) les directions de faisceau (DE1, DE2,...DEi,...DEn) sont réparties en azimut de manière que lorsque les projecteurs sont activés sélectivement pour des acquisitions d'image par les imageurs associés, tous les points de la circonférence de la tranche des récipients sont éclairés par au moins un des projecteurs ;
- un système électronique (III) relié aux projecteurs et aux imageurs et adapté pour activer sélectivement les imageurs simultanément avec des projecteurs associés de manière à acquérir des images de chaque récipient traversant la zone d'inspection en vue de leur analyse pour détecter des défauts ;
**caractérisé en ce que** :
- le support (14) est un corps indéformable sur lequel les projecteurs et les imageurs, sont montés par une liaison complète (13) de manière à fixer, par rapport audit support, les directions de faisceau (DE1, DE2,...DEi,...DEn) des projecteurs et les axes optiques (AC1, AC2,...ACi,...ACn) des imageurs, ce support comportant un volume libre (Vt) englobant au moins le volume engendré par le profil des récipients selon uniquement la translation rectiligne des récipients dans la zone d'inspection, les imageurs et les projecteurs étant situés en dehors de ce volume libre ;
- plusieurs ensembles de projecteurs comportent chacun au moins six projecteurs dont la direction de leur faisceau est tangente à un cylindre de diamètre inclus dans une gamme de diamètres déterminée, ces gammes de diamètres étant différentes d'un ensemble à l'autre et fonction du diamètre de la tranche du récipient ;
- les projecteurs des ensembles possèdent une direction de faisceau avec des angles d'élévation de valeur absolue prise entre 0° et 45°, et de signe opposé aux angles d'élévation des axes optiques des imageurs associées ;
- les imageurs possèdent des axes optiques dont les angles d'élévation sont de valeur absolue prise entre 0° et 60°, et de signe opposé aux angles d'élévation des directions de faisceau des projecteurs associés ;
- le système électronique (III) est configuré pour inspecter les récipients relevant de la totalité desdites gammes de diamètres, de manière que lors de l'inspection des récipients dont le diamètre de la tranche à inspecter est inclus dans la gamme de diamètres d'un ensemble, le système électronique assure l'acquisition d'au moins six images de chaque récipient durant sa traversée de la zone d'inspection en activant sélectivement les au moins six imageurs simultanément avec les projecteurs associés dudit ensemble.

2. Poste d'inspection selon la revendication 1, selon lequel les projecteurs (E1, E2,...Ei,...En) des différents ensembles sont disposés selon un arrangement comprenant côte à côte et/ou juxtaposé, un projecteur pilotable de chaque ensemble, ledit arrangement étant répété pour répartir les projecteurs pilotables en azimut autour de l'axe central (A) des récipients.

3. Poste d'inspection selon l'une des revendications précédentes, selon lequel les ensembles de projecteurs (E1, E2,...Ei,...En) comportent plusieurs sous-ensembles comportant chacun au moins six projecteurs et avec chacun un angle d'élévation de valeur absolue différente d'au moins 5°.

4. Poste d'inspection selon l'une des revendications précédentes, selon lequel chaque ensemble comporte au moins six projecteurs (E1, E2,...Ei,...En) avec des directions de faisceau présentant en azimut, une incidence sur la tranche de récipient tangentielle horaire, et au moins six projecteurs avec des directions de faisceau présentant en azimut une incidence sur la tranche de récipient tangentielle antihoraire.

5. Poste d'inspection selon l'une des revendications précédentes, selon lequel le support (14) délimite le volume libre avec une largeur telle que les projecteurs (E1, E2,...Ei,...En) positionnés à la même hauteur que le volume libre, ont une direction de faisceau ayant des angles d'azimut entre +5° et +175 ° et entre +185° et +355°.

6. Poste d'inspection selon l'une des revendications précédentes, selon lequel le support (14) délimite le chemin de circulation pour une tranche des récipients correspondant à la bague ou au fond des récipients.

7. Poste d'inspection selon l'une des revendications précédentes, selon lequel plusieurs groupements (BH) d'au moins six projecteurs (E1, E2,...Ei,...En) sont montés par une liaison complète (13) sur le support (14) en étant situés en dehors du volume libre, les projecteurs d'un groupement illuminant une tranche de récipient incluse dans une gamme de diamètres, la dite gamme étant différente d'un groupement à l'autre, les projecteurs d'un groupement étant activés sélectivement de façon synchronisée avec des imageurs associés durant chaque acquisition d'image par lesdits imageurs associés, de manière que tous les points de la circonférence de la tranche des récipients à inspecter sont éclairés par au moins un des projecteurs, les projecteurs d'un groupement (BH) ayant une direction de faisceau selon une élévation de même signe que l'élévation de l'axe optique des imageurs associés.

8. Poste d'inspection selon l'une des revendications précédentes, selon lequel le support (14) présente deux ouvertures (16, 17) aménagées diamétralement opposées selon un profil fixe et définissant l'entrée et la sortie du chemin de circulation des récipients (2) et encadrant le volume libre.

9. Poste d'inspection selon l'une des revendications précédentes, selon lequel le support (14) comporte un système de positionnement (21) pour les imageurs (C1, C2,...Ci,..Cn) et les projecteurs (E1, E2,...Ei,...En), assurant pour chacun, une position unique, par rapport à un plan de référence (Prfs) du support, de la direction du faisceau du projecteur et de l'axe optique de l'imageur.

10. Poste d'inspection selon la revendication précédente, selon lequel les systèmes de positionnement (21) pour les imageurs (C1, C2,...Ci,..Cn) et les projecteurs (E1, E2,...Ei,...En) sont aménagés sur le support (14) pour permettre leur montage sur la face externe du support, le support (14) comportant une multitude de trous (22) pour le passage de la lumière reçue par les imageurs et/ou émise par les projecteurs.

11. Poste d'inspection selon l'une des revendications précédentes, selon lequel le support (14) est un corps indéformable creux possédant la forme d'un polyèdre ou d'au moins une sphère tronquée.

12. Installation d'inspection comportant :
- au moins un poste d'inspection conforme à l'une des revendications 1 à 11 ;
- au moins un système de transport (II) adapté pour assurer le défilement, sans rotation, des récipients selon uniquement une direction de translation rectiligne, dans le chemin de circulation de chaque support (14).

13. Installation d'inspection selon la revendication précédente, comportant :
- un poste d'inspection des bagues des récipients pourvu d'un support (14) délimitant un chemin de circulation pour une tranche des récipients correspondant à la bague, et/ou ;
- un poste d'inspection des corps des récipients pourvu d'un support (14) délimitant un chemin de circulation pour une tranche des récipients correspondant au corps, et/ou ;
- un poste d'inspection des fonds des récipients pourvu d'un support (14) délimitant un chemin de circulation pour une tranche des récipients correspondant au fond.

14. Installation d'inspection selon l'une des revendications précédentes 12 ou 13, selon laquelle un dispositif de réglage permet de faire coïncider le plan de référence d'inspection des récipients déplacés par le système de translation avec le plan de référence du support.

15. Procédé pour détecter des défauts de type glaçures dans au moins une tranche de récipients possédant un axe central (A), le procédé étant tel que :
- un nombre déterminé de gammes de diamètres pour les tranches des récipients à inspecter est choisi ;
- les récipients sont déplacés sans rotation autour de leur axe central (A) selon uniquement une direction de translation rectiligne pour défiler dans un chemin de circulation d'un support comprenant successivement, une entrée, une zone d'inspection et une sortie pour les récipients ;
- des projecteurs (E1, E2,...Ei,...En) et des imageurs (C1, C2,...Ci,..Cn) sont montés par une liaison complète (13) sur le support (14) de manière à fixer, par rapport au support, les directions de faisceau des projecteurs et les axes optiques des imageurs, ce support comportant un volume libre englobant au moins le volume engendré par le profil des récipients selon uniquement la translation rectiligne des récipients dans la zone d'inspection, les imageurs et les projecteurs étant situés en dehors de ce volume libre ;
- au moins six imageurs (C1, C2,...Ci,..Cn) formant des images et possédant un axe optique dirigé vers l'intérieur de la zone d'inspection sont montés sur le support de manière que leurs axes optiques sont répartis autour de l'axe vertical des récipients en choisissant leurs angles d'azimut entre 0 et 360° par rapport à la direction de translation, de sorte que tous les points de la circonférence de la tranche des récipients soient représentés dans au moins une image acquise durant la traversée de la zone d'inspection par la tranche de récipient, les imageurs possédant des axes optiques dont les angles d'élévation sont de valeur absolue prise entre 0° et 90°, et de signe opposé aux angles d'élévation des directions de faisceau des projecteurs associés ;
- les projecteurs (E1, E2,...Ei,...En) forment plusieurs ensembles comportant chacun au moins six projecteurs dont la direction de leur faisceau est tangente à un cylindre de diamètre centré sur l'axe central (A) du récipient et inclus dans une gamme de diamètres déterminée, ces gammes de diamètres étant différentes d'un ensemble à l'autre et fonction du diamètre de la tranche des récipients ;
- les projecteurs des ensembles possèdent une direction de faisceau avec des angles d'élévation de valeur absolue prise entre 10° et 45°, et de signe opposé aux angles d'élévation des axes optique des imageurs associés, les directions de faisceau étant réparties en azimut de manière que lorsque les projecteurs sont activés successivement pour des acquisitions d'image par les imageurs associés, tous les points de la circonférence de la tranche des récipients sont éclairés par au moins un des projecteurs ;
- lors d'une phase d'inspection des récipients dont le diamètre de la tranche des récipients est inclus dans la gamme de diamètres d'un ensemble, les au moins six imageurs sont activés sélectivement et simultanément avec les projecteurs associés dudit ensemble pour acquérir au moins six images de chaque récipient traversant la zone d'inspection en vue de leur analyse pour détecter des défauts.

16. Procédé selon la revendication 15, **caractérisé en ce qu'**il comporte une phase de réglage durant laquelle, en fonction au moins de la gamme de diamètres pour les tranches des récipients à inspecter :
- on enregistre dans tous les imageurs leur propre liste de jeux de paramètres d'acquisition, lesdits jeux de paramètres d'acquisition incluant un temps d'intégration, un gain, les coordonnées d'une ROI, et/ou une information inhibant l'acquisition ;
- on enregistre dans tous les projecteurs sa propre liste de jeux de paramètres d'illumination, lesdits jeux de paramètres d'illumination incluant un temps et/ou une intensité lumineuse, et/ou une information inhibant l'illumination.

17. Procédé selon la revendication précédente, **caractérisé en ce que** lors de la phase d'inspection de chaque récipient :
- on adresse simultanément d'une part, à des imageurs (C1, C2,...Ci,..Cn) au moins un premier signal qui déclenche pour chacun l'acquisition d'images selon un jeu de paramètres d'acquisition pris dans sa propre liste de jeux de paramètres d'acquisition, et d'autre part, à des projecteurs un signal qui déclenche l'illumination du récipient par chaque projecteur selon un jeu de paramètres d'illumination pris dans sa propre liste de jeux de paramètres d'illumination , un des paramètres pouvant signifier qu'aucune illumination n'est faite ;
- on adresse simultanément décalé dans le temps, d'une part, à des imageurs (C1, C2,...Ci,..Cn) au moins un deuxième signal qui déclenche une autre acquisition d'images selon un autre jeu de paramètres d'acquisition pris dans la liste de chaque imageur, et d'autre part, à des projecteurs, un deuxième signal qui déclenche l'illumination du récipient par les projecteurs selon un autre jeu de paramètres d'illumination.

## Patentansprüche

1. Station zur Detektion von Defekten vom Glasurtyp in einem Abschnitt von Behältern (2), die eine Mittelachse (A) aufweisen und sich in einer Verschiebungsrichtung ohne Drehung um deren Mittelachse bewegen, wobei die Station umfasst:
- einen Träger (14), der entlang eines Weges angeordnet ist, in dem mindestens ein Abschnitt der Behälter zirkuliert, der sich unter einer Prüfbezugsebene des Halses (Prib) oder über einer Prüfbezugsebene des Bodens (Prif) erstreckt, wobei dieser Zirkulationsweg (Vt) nacheinander einen Einlass, eine Prüfzone und einen Auslass für die Behälter umfasst,
- mindestens sechs Bildaufnehmer (C1, C2, ... Ci, ... Cn), die Bilder erzeugen und eine optische Achse aufweisen, die dem Inneren der Prüfzone zugewandt ist, während sie an dem Träger derart angebracht ist, dass ihre optischen Achsen um die Mittelachse (A) der Behälter verteilt sind, indem ihre Azimutwinkel zwischen 0 und 360° in Bezug auf die Verschiebungsrichtung ausgewählt werden, sodass sämtliche Punkte des Umfangs des Abschnitts der Behälter in mindestens einem Bild dargestellt sind, das während des Durchgangs des Behälterabschnitts durch die Prüfzone aufgenommen wird,
- mindestens zwölf Projektoren (E1, E2, ... Ei, ... En), die mehrere Sätze bilden, die jeweils mindestens sechs an dem Träger angebrachte Projektoren umfassen, jeweils eine Strahlenrichtung aufweisen und auf dem Träger derart positioniert sind, dass:
(a) die Strahlenrichtungen (DE1, DE2, ... DEi, ... DEn) tangential zu einem auf der Mittelachse (A) des Behälters zentrierten Zylinder sind, wobei der Durchmesser des Zylinders in einem Durchmesserbereich von Behälterabschnitten liegt,
(b) die Strahlenrichtungen (DE1, DE2, ... DEi, ... DEn) im Azimut derart verteilt sind, dass, wenn die Projektoren selektiv zur Bildaufnahme durch die zugehörigen Bildaufnehmer aktiviert werden, sämtliche Punkte des Umfangs des Behälterabschnitts durch mindestens einen der Projektoren beleuchtet werden,
- ein elektronisches System (III), das mit den Projektoren und mit den Bildaufnehmern verbunden ist und dazu ausgelegt ist, die Bildaufnehmer gleichzeitig mit den zugehörigen Projektoren derart selektiv zu aktivieren, dass Bilder jedes die Prüfzone durchlaufenden Behälters zwecks ihrer Analyse zur Detektion von Defekten aufgenommen werden,
**dadurch gekennzeichnet, dass**:
- der Träger (14) ein nicht verformbarer Körper ist, auf dem die Projektoren und die Bildaufnehmer durch eine vollständige Verbindung (13) derart angebracht sind, dass die Strahlenrichtungen (DE1, DE2, ... DEi, ... DEn) der Projektoren und die optischen Achsen (AC1, AC2, ... ACi, ... ACn) der Bildaufnehmer in Bezug auf den Träger feststehend sind, wobei dieser Träger ein freies Volumen (Vt) umfasst, das zumindest das Volumen einschließt, das durch das Profil der Behälter gemäß nur der Linearverschiebung der Behälter in der Prüfzone gebildet wird, wobei sich die Bildaufnehmer und die Projektoren außerhalb dieses freien Volumens befinden,
- mehrere Sätze von Projektoren jeweils mindestens sechs Projektoren umfassen, deren Strahlenrichtung tangential zu einem Zylinder mit einem Durchmesser ist, der in einem bestimmten Durchmesserbereich liegt, wobei sich diese Durchmesserbereiche von einem Satz zum anderen unterscheiden und von dem Durchmesser des Abschnitts des Behälters abhängig sind,
- die Projektoren der Sätze eine Strahlenrichtung mit Höhenwinkeln mit einem Absolutwert zwischen 0° und 45° und entgegengesetztem Vorzeichen zu den Höhenwinkeln der optischen Achsen der zugehörigen Bildaufnehmer aufweisen,
- die Bildaufnehmer optische Achsen aufweisen, deren Höhenwinkel einen Absolutwert zwischen 0° und 60° und ein entgegengesetztes Vorzeichen zu den Höhenwinkeln der Strahlenrichtungen der zugehörigen Projektoren aufweisen,
- das elektronische System (III) dazu ausgestaltet ist, die Behälter, die in sämtliche Durchmesserbereiche fallen, derart zu prüfen, dass, wenn die Prüfung der Behälter, deren Durchmesser des zu prüfenden Abschnitts in dem Durchmesserbereich eines Satzes liegt, das elektronische System die Aufnahme von mindestens sechs Bildern jedes Behälters während seines Durchgangs durch die Prüfzone sicherstellt, indem es die mindestens sechs Bildaufnehmer gleichzeitig mit den zugehörigen Projektoren des Satzes selektiv aktiviert.

2. Prüfstation nach Anspruch 1, wobei die Projektoren (E1, E2, ... Ei, ... En) der unterschiedlichen Sätze gemäß einer Anordnung angeordnet sind, die nebeneinander und/oder aneinander einen steuerbaren Projektor jedes Satzes umfasst, wobei sich die Anordnung wiederholt, um die steuerbaren Projektoren im Azimut um die Mittelachse (A) der Empfänger zu verteilten.

3. Prüfstation nach einem der vorhergehenden Ansprüche, wobei die Sätze von Projektoren (E1, E2, ... Ei, ... En) mehrere Teilsätze umfassen, die jeweils mindestens sechs Projektoren und jeweils mit einem Höhenwinkel mit einem unterschiedlichen Absolutwert von mindestens 5° umfassen.

4. Prüfstation nach einem der vorhergehenden Ansprüche, wobei jeder Satz mindestens sechs Projektoren (E1, E2, ... Ei, ... En) mit Strahlenrichtungen, die im Azimut einen tangentialen Einfall auf den Behälterabschnitt im Uhrzeigersinn aufweisen, und mindestens sechs Projektoren mit Strahlenrichtungen, die im Azimut einen tangentialen Einfall auf den Behälterabschnitt entgegen dem Uhrzeigersinn aufweisen, umfasst.

5. Prüfstation nach einem der vorhergehenden Ansprüche, wobei der Träger (14) das freie Volumen mit einer Breite derart begrenzt, dass die Projektoren (E1, E2, ... Ei, ... En), die auf derselben Höhe wie das freie Volumen positioniert sind, eine Strahlenrichtung mit Azimutwinkeln zwischen +5° und +175° und zwischen +185° und +355° aufweisen.

6. Prüfstation nach einem der vorhergehenden Ansprüche, wobei der Träger (14) den Zirkulationsweg für einen Abschnitt der Behälter begrenzt, der dem Hals oder dem Boden der Behälter entspricht.

7. Prüfstation nach einem der vorhergehenden Ansprüche, wobei mehrere Gruppierungen (BH) aus mindestens sechs Projektoren (E1, E2, ... Ei, ... En) durch eine vollständige Verbindung (13) auf dem Träger (14) angebracht sind, während sie sich außerhalb des freien Volumens befinden, wobei die Projektoren einer Gruppierung einen Behälterabschnitt beleuchten, der in einem Durchmesserbereich liegt, wobei der Bereich von einer Gruppierung zur anderen unterschiedlich ist, wobei die Projektoren einer Gruppierung bei jeder Aufnahme eines Bildes durch die zugehörigen Bildaufnehmer synchron zu den zugehörigen Bildaufnehmern derart selektiv aktiviert werden, dass sämtliche Punkte des Umfangs des zu überprüfenden Abschnitts der Behälter durch mindestens einen der Projektoren beleuchtet werden, wobei die Projektoren einer Gruppierung (BH) eine Strahlenrichtung gemäß einer Höhe mit dem gleichen Vorzeichen wie die Höhe der optischen Achse der zugehörigen Bildaufnehmer aufweisen.

8. Prüfstation nach einem der vorhergehenden Ansprüche, wobei der Träger (14) zwei Öffnungen (16, 17) aufweist, die diametral entgegengesetzt gemäß einem feststehenden Profil angeordnet sind und den Einlass und den Auslass des Zirkulationsweges der Behälter (2) definieren und das freie Volumen umschließen.

9. Prüfstation nach einem der vorhergehenden Ansprüche, wobei der Träger (14) ein Positionierungssystem (21) für die Bildaufnehmer (C1, C2, ... Ci, ... Cn) und die Projektoren (E1, E2, ... Ei, ... En) umfasst, das jeweils eine eindeutige Position der Strahlenrichtung des Projektors und der optischen Achse des Bildaufnehmers in Bezug auf eine Bezugsebene (Prfs) des Trägers sicherstellt.

10. Prüfstation nach dem vorhergehenden Anspruch, wobei die Positionierungssysteme (21) für die Bildaufnehmer (C1, C2, ... Ci, ... Cn) und die Projektoren (E1, E2, ... Ei, ... En) auf dem Träger (14) angeordnet sind, um deren Montage auf der Außenfläche des Trägers zu ermöglichen, wobei der Träger (14) mehrere Löcher (22) für den Durchgang des durch die Bildaufnehmer empfangenen und/oder durch die Projektoren abgegebenen Lichts umfasst.

11. Prüfstation nach einem der vorhergehenden Ansprüche, wobei der Träger (14) ein nicht verformbarer Hohlkörper ist, der die Form eines Polyeders oder zumindest einer geschnittenen Kugel aufweist.

12. Prüfeinrichtung, umfassend:
- mindestens eine Prüfstation nach einem der Ansprüche 1 bis 11,
- mindestens ein Transportsystem (II), das dazu ausgelegt ist, die drehfreie Bewegung der Behälter gemäß nur einer linearen Verschiebungsrichtung in dem Zirkulationsweg jedes Trägers (14) sicherzustellen.

13. Prüfeinrichtung nach dem vorhergehenden Anspruch, umfassend:
- eine Prüfstation für Hälse der Behälter, die mit einem Träger (14) versehen ist, der einen Zirkulationsweg für einen Abschnitt der Behälter, welcher dem Hals entspricht, begrenzt und/oder,
- eine Prüfstation für Körper der Behälter, die mit einem Träger (14) versehen ist, der einen Zirkulationsweg für einen Abschnitt der Behälter, welcher dem Körper entspricht, begrenzt und/oder,
- eine Prüfstation für Böden der Behälter, die mit einem Träger (14) versehen ist, der einen Zirkulationsweg für einen Abschnitt der Behälter, welcher dem Boden entspricht, begrenzt.

14. Prüfeinrichtung nach einem der vorhergehenden Ansprüche 12 oder 13, wobei eine Einstellvorrichtung es ermöglicht, die Prüfbezugsebene der durch das Verschiebungssystem verfahrenen Behälter mit der Bezugsebene des Trägers in Übereinstimmung zu bringen.

15. Verfahren zur Detektion von Defekten vom Glasurtyp in mindestens einem Abschnitt von Behältern, die eine Mittelachse (A) aufweisen, wobei das Verfahren derart beschaffen ist, dass:
- eine bestimmte Anzahl von Durchmesserbereichen für die zu prüfenden Abschnitte der Behälter ausgewählt wird,
- die Behälter ohne Drehung um deren Mittelachse (A) gemäß nur einer linearen Verschiebungsrichtung verfahren werden, um in einem Zirkulationsweg eines Trägers bewegt zu werden, der nacheinander einen Einlass, eine Prüfzone und einen Auslass für die Behälter umfasst,
- Projektoren (E1, E2, ... Ei, ... En) und Bildaufnehmer (C1, C2, ... Ci, ... Cn) durch eine vollständige Verbindung (13) auf dem Träger (14) derart angebracht sind, dass die Strahlenrichtungen der Projektoren und die optischen Achsen der Bildaufnehmer in Bezug auf den Träger feststehend sind, wobei dieser Träger ein freies Volumen umfasst, das zumindest das Volumen einschließt, das durch das Profil der Behälter gemäß nur der Linearverschiebung der Behälter in der Prüfzone gebildet wird, wobei sich die Bildaufnehmer und die Projektoren außerhalb dieses freien Volumens befinden,
- mindestens sechs Bildaufnehmer (C1, C2, ... Ci, ... Cn), die Bilder erzeugen und eine optische Achse aufweisen, die dem Inneren der Prüfzone zugewandt ist, auf dem Träger derart angebracht sind, dass ihre optischen Achsen um die vertikale Achse der Behälter verteilt sind, indem ihre Azimutwinkel zwischen 0 und 360° in Bezug auf die Verschiebungsrichtung ausgewählt werden, sodass sämtliche Punkte des Umfangs des Abschnitts der Behälter in mindestens einem Bild dargestellt sind, das während des Durchgangs des Behälterabschnitts durch die Prüfzone aufgenommen wird, wobei die Bildaufnehmer optische Achsen aufweisen, deren Höhenwinkel einen Absolutwert zwischen 0° und 90° und ein entgegengesetztes Vorzeichen zu den Höhenwinkeln der Strahlenrichtungen der zugehörigen Projektoren aufweisen,
- die Projektoren (E1, E2, ... Ei, ... En) mehrere Sätze bilden, die jeweils mindestens sechs Projektoren umfassen, deren Strahlenrichtung tangential zu einem auf der Mittelachse (A) des Behälters zentrierten Zylinders mit einem Durchmesser ist, der in einem bestimmten Durchmesserbereich liegt, wobei sich diese Durchmesserbereiche von einem Satz zum anderen unterscheiden und von dem Durchmesser des Abschnitts des Behälters abhängig sind,
- die Projektoren der Sätze eine Strahlenrichtung mit Höhenwinkeln mit einem Absolutwert zwischen 10° und 45° und entgegengesetztem Vorzeichen zu den Höhenwinkeln der optischen Achsen der zugehörigen Bildaufnehmer aufweisen, wobei die Strahlenrichtungen im Azimut derart verteilt sind, dass, wenn die Projektoren nacheinander zur Bildaufnahme durch die zugehörigen Bildaufnehmer aktiviert werden, sämtliche Punkte des Umfangs des Abschnitts der Behälter durch mindestens einen der Projektoren beleuchtet werden,
- während einer Prüfphase der Behälter, bei denen der Durchmesser des Abschnitts der Behälter in dem Durchmesserbereich eines Satzes liegt, die mindestens sechs Bildaufnehmer selektiv und gleichzeitig mit den zugehörigen Projektoren des Satzes aktiviert werden, um mindestens sechs Bilder jedes die Prüfzone durchlaufenden Behälters zwecks ihrer Analyse zur Detektion von Defekten aufzunehmen.

16. Verfahren nach Anspruch 15, **dadurch gekennzeichnet, dass** es eine Einstellphase umfasst, während der zumindest je nach dem Durchmesserbereich für die zu prüfenden Abschnitte der Behälter:
- in jedem Bildaufnehmer dessen eigene Liste von Aufnahmeparametersätzen gespeichert wird, wobei die Aufnahmeparametersätze eine Integrationszeit, eine Verstärkung, die Koordinaten einer ROI und/oder eine die Aufnahme verhindernde Information beinhalten,
- in jedem Projektor dessen eigene Liste von Beleuchtungsparametersätzen gespeichert wird, wobei die Beleuchtungsparametersätze eine Zeit und/oder eine Lichtintensität und/oder eine die Beleuchtung verhindernde Information beinhalten.

17. Verfahren nach dem vorhergehenden Anspruch, **dadurch gekennzeichnet, dass** während der Prüfphase jedes Behälters:
- einerseits gleichzeitig an die Bildaufnehmer (C1, C2, ... Ci, ... Cn) mindestens ein erstes Signal, das bei jedem die Bildaufnahme gemäß einem Aufnahmeparametersatz auslöst, der in dessen eigener Liste von Aufnahmeparametersätzen enthalten ist, und andererseits an die Projektoren ein Signal, das die Beleuchtung des Behälters durch jeden Projektor gemäß einem Beleuchtungsparametersatz auslöst, der in dessen eigener Liste von Beleuchtungsparametersätzen enthalten ist, wobei einer der Parameter bedeuten kann, dass keine Beleuchtung erfolgt, gesendet wird,
- zeitversetzt einerseits gleichzeitig an die Bildaufnehmer (C1, C2, ... Ci, ... Cn) mindestens ein zweites Signal, das eine andere Bildaufnahme gemäß einem anderen Aufnahmeparametersatz auslöst, der in der Liste jedes Bildaufnehmers enthalten ist, und andererseits an die Projektoren ein zweites Signal, das die Beleuchtung des Behälters durch die Projektoren gemäß einem anderen Beleuchtungsparametersatz auslöst, gesendet wird.

## Claims

1. A station for detecting glaze defects in a section of containers (2) having a central axis (A) and moving in a translation direction, without rotation around their central axis, the station comprising:
- a support (14) disposed along a path in which at least one section of the containers circulates, extending below a finish inspection reference plane (Prib) or above a bottom inspection reference plane of the bottom (Prif), this circulation path (Vt) successively comprising, an inlet, an inspection zone and an outlet for the containers;
- at least six imagers (C1, C2,...Ci,..Cn) forming images and having an optical axis directed towards the interior of the inspection zone, being mounted on the support such that their optical axes are distributed around the central axis (A) of the containers by choosing their angles of azimuth between 0 and 360° relative to the translation direction, such that all the points of the circumference of the section of the containers are represented in at least one image acquired during the passage through the inspection zone by the container section;
- at least twelve projectors (E1, E2,...Ei,...En) forming several sets, each set comprising at least six projectors mounted on the support, each having a beam direction and positioned on the support such that:
(a) the beam directions (DE1, DE2,...DEi,...DEn) are tangents to a cylinder centred on the central axis (A) of the container, the diameter of the cylinder being included in a range of diameters of container sections;
(b) the beam directions (DE1, DE2,...DEi,...DEn) are distributed in azimuth such that when the projectors are selectively activated for image acquisitions by the associated imagers, all the points of the circumference of the section of the containers are illuminated by at least one of the projectors;
- an electronic system (III) connected to the projectors and to the imagers and suitable for selectively activating the imagers simultaneously with the associated projectors so as to acquire images of each container passing through the inspection zone, with a view to their analyse for detecting defects;
**characterised in that**:
- the support (14) is a non-deformable body on which the projectors and the imagers are mounted via a full link (13) so as to fix, relative to said support, the beam directions (DE1, DE2,...DEi,...DEn) of the projectors and the optical axes (AC1, AC2,...ACi,...ACn) of the imagers, this support comprising a free volume (Vt) encompassing at least the volume created by the profile of the containers, according only to the rectilinear translation of the containers in the inspection zone, the imagers and the projectors being situated outside this free volume;
- several sets of projectors each include at least six projectors, for which the direction of their beam is tangential to a cylinder of diameter included in a determined range of diameters, these ranges of diameters being different from one set to another and a function of the diameter of the section of the container;
- the projectors of the sets have a beam direction with angles of elevation with absolute value between 0° and 45°, and of opposite sign to the angles of elevation of the optical axes of the associated imagers;
- the imagers have optical axes, for which the angles of elevation have an absolute value between 0° and 60°, and of opposite sign to the angles of elevation of the beam directions of the associated projectors;
- the electronic system (III) is configured for inspecting the containers falling within all said ranges of diameters, such that during the inspection of the containers for which the diameter of the section to be inspected is included in the range of diameters of a set, the electronic system ensures the acquisition of at least six images of each container as it passes through the inspection zone by selectively activating the at least six imagers simultaneously with the associated projectors of said set.

2. The inspection station according to claim 1, wherein the projectors (E1, E2,...Ei,...En) of the various sets are disposed in an arrangement comprising, side-by-side and/or juxtaposed, a controllable projector of each set, said arrangement being repeated in order to distribute the controllable projectors in azimuth around the central axis (A) of the containers.

3. The inspection station according to one of the preceding claims, wherein the sets of projectors (E1, E2,...Ei,...En) comprise a plurality of sub-sets, each comprising at least six projectors and each with an angle of elevation with absolute value different by at least 5°.

4. The inspection station according to one of the preceding claims, wherein each set comprises at least six projectors (E1, E2,...Ei,...En) with beam directions having in azimuth, a clockwise tangential incidence on the container section, and at least six projectors with beam directions having in azimuth a counterclockwise tangential incidence in the container section.

5. The inspection station according to one of the preceding claims, wherein the support (14) delimits the free volume with a width such that the projectors (E1, E2,...Ei,...En) positioned at the same height as the free volume, have a beam direction having angles of azimuth between +5° and +175 ° and between +185° and +355°.

6. The inspection station according to one of the preceding claims, wherein the support (14) delimits the circulation path for a section of the containers corresponding to the finish or the bottom of the containers.

7. The inspection station according to one of the preceding claims, wherein several groups (BH) of at least six projectors (E1, E2,...Ei,...En) are mounted via a full link (13) on the support (14) being located outside the free volume, the projectors of a group illuminating a container section included in a range of diameters, said range being different from one group to another, the projectors of a group being selectively activated in a synchronised manner with the associated imagers during each image acquisition by said associated imagers, such that all the points of the circumference of the section of the containers to be inspected are illuminated by at least one of the projectors, the projectors of a group (BH) having a beam direction along an elevation of same sign as the elevation of the optical axis of the associated imagers.

8. The inspection station according to one of the preceding claims, wherein the support (14) has two openings (16, 17) arranged diametrically opposed along a fixed profile and defining the inlet and the outlet of the circulation path of the containers (2) and framing the free volume.

9. The inspection station according to one of the preceding claims, wherein the support (14) includes a positioning system (21) for the imagers (C1, C2,...Ci,..Cn) and the projectors (E1, E2,...Ei,...En), ensuring a unique position for each, relative to a reference plane (Prfs) of the support, the direction of the beam of the projector and the optical axis of the imager.

10. The inspection station according to the preceding claim, wherein the positioning systems (21) for the imagers (C1, C2,...Ci,..Cn) and the projectors (E1, E2,...Ei,...En) are arranged on the support (14) in order to allow their mounting on the outer face of the support, the support (14) comprising a multitude of holes (22) for the passage of the light received by the imagers and/or emitted by the projectors.

11. The inspection station according to one of the preceding claims, wherein the support (14) is a non-deformable hollow body having the form of a polyhedron or of at least one truncated sphere.

12. An inspection facility comprising:
- at least one inspection station in accordance with claims 1 to 11;
- at least one transport system (II) suitable for ensuring the movement, without rotation, of the containers uniquely in a rectilinear translation direction, in the circulation path of each support (14).

13. The inspection facility according to the preceding claim, comprising:
- an inspection station for finishes of containers, provided with a support (14) delimiting a circulation path for a section of the containers corresponding to the finish, and/or;
- an inspection station for the bodies of containers, provided with a support (14) delimiting a circulation path for a section of the containers corresponding to the body, and/or;
- an inspection station of the bottoms of containers, provided with a support (14) delimiting a circulation path for a section of the containers corresponding to the bottom.

14. The inspection facility according to one of preceding claims 12 or 13, wherein an adjustment device enables the inspection reference plane of the containers moved by the translation system to be made coincident with the reference plane of the support.

15. A method for detecting glaze defects in at least one section of containers having a central axis (A), the method being such that:
- a determined number of ranges of diameters for the sections of the containers to be inspected is chosen;
- the containers are moved without rotation around their central axis (A) uniquely in a rectilinear translation direction, in order to move in a circulation path of a support successively comprising, an inlet, an inspection zone and an outlet for the containers;
- projectors (E1, E2,...Ei,...En) and imagers (C1, C2,...Ci,..Cn) are mounted via a full link (13) on the support (14) so as to fix, relative to the support, the beam directions of the projectors and the optical axes of the imagers, this support comprising a free volume encompassing at least the volume created by the profile of the containers uniquely in the rectilinear translation of the containers in the inspection zone, the imagers and the projectors being located outside this free volume;
- at least six imagers (C1, C2,...Ci,..Cn) forming images and having an optical axis directed towards the interior of the inspection zone, being mounted on the support such that their optical axes are distributed around the vertical axis of the containers by choosing their angles of azimuth between 0 and 360° relative to the translation direction, such that all the points of the circumference of the section of the containers are represented in at least one image acquired during the passage through the inspection zone by the container section, the imagers have optical axes, for which the angles of elevation have an absolute value between 0° and 90°, and of opposite sign to the angles of elevation of the beam directions of the associated projectors;
- the projectors (E1, E2,...Ei,...En) form several sets, each set comprising at least six projectors, for which the direction of their beam is tangential to a cylinder of diameter centred on the central axis (A) of the container and included in a determined range of diameters, these ranges of diameters being different from one set to another and a function of the diameter of the section of the containers;
- the projectors of the sets have a beam direction with angles of elevation of absolute value between 10° and 45°, and of opposite sign to the angles of elevation of the optical axes of the associated imagers, the beam directions being distributed in azimuth such that when the projectors are successively activated for image acquisitions by the associated imagers, all the points of the circumference of the section of the containers are illuminated by at least one of the projectors;
- during an inspection phase of the containers for which the diameter of the section of the containers is included in the range of diameters of a set, the at least six imagers are selectively activated and simultaneously with the associated projectors of said set in order to acquire at least six images of each container passing through the inspection zone, with a view to their analysis for detecting defects.

16. The method according to claim 15, **characterised in that** it comprises an adjustment phase during which, at least as a function of the range of diameters for the sections of the containers to be inspected:
- in all the imagers, their own list of sets of acquisition parameters are recorded, said sets of acquisition parameters including an integration time, a gain, the coordinates of a ROI, and/or information preventing the acquisition;
- in all the projectors, their own list of sets of illumination parameters are recorded, said sets of illumination parameters including a time and/or a luminous intensity, and/or information preventing the illumination.

17. The method according to the preceding claim, **characterised in that** during the inspection phase of each container:
- on the one hand, at least one first signal which triggers the acquisition of images for each imager according to a set of acquisition parameters taken from its own list of sets of acquisition parameters is addressed to the imagers (C1, C2,...Ci,..Cn) and, on the other hand, a signal which triggers the illumination of the container by each projector according to a set of illumination parameters taken from its own list of sets of illumination parameters is simultaneously addressed to the projectors, one of the parameters being able to signify that no illumination is made;
- offset in time, on the one hand, at least one second signal which triggers another image acquisition according to another set of acquisition parameters taken from the list of each imager is addressed to the imagers (C1, C2,...Ci,..Cn), and, on the other hand, a second signal which triggers the illumination of the container by the projectors according to another set of illumination parameters is simultaneously addressed to the projectors.
